(19) Europäisches Patentamt / European Patent Office / Office européen des brevets

(11) **EP 4 036 818 A1**

(12) **EUROPEAN PATENT APPLICATION**
published in accordance with Art. 153(4) EPC

(43) Date of publication:
**03.08.2022 Bulletin 2022/31**

(21) Application number: **20867346.7**

(22) Date of filing: **26.08.2020**

(51) International Patent Classification (IPC):
**G06Q 10/00** (2012.01)   **A01B 69/00** (2006.01)
**E02F 9/20** (2006.01)   **G01M 17/007** (2006.01)

(52) Cooperative Patent Classification (CPC):
**A01B 69/00; E02F 9/20; G01M 17/007; G06Q 10/00**

(86) International application number:
**PCT/JP2020/032125**

(87) International publication number:
**WO 2021/059832 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2019 JP 2019173367**
**08.07.2020 JP 2020117971**

(71) Applicant: **Yanmar Power Technology Co., Ltd.**
**Osaka-shi**
**Osaka 530-0013 (JP)**

(72) Inventors:
• **FURUICHI, Mitsuhiro**
**Osaka-shi, Osaka 530-0014 (JP)**
• **KAWAI, Hiroki**
**Osaka-shi, Osaka 532-0003 (JP)**

(74) Representative: **Dennemeyer & Associates S.A.**
**Postfach 70 04 25**
**81304 München (DE)**

(54) **WORK MACHINE MAINTENANCE MANAGEMENT SYSTEM, WORK MACHINE MAINTENANCE MANAGEMENT METHOD, AND WORK MACHINE MAINTENANCE MANAGEMENT PROGRAM**

(57) According to the present invention, a maintenance management system (200) comprises an acquisition unit (201), and an output unit (203). The acquisition unit (201) acquires an actual operation time of a target work machine (2) including a plurality of management units. The output unit (203) outputs maintenance information regarding the maintenance time for at least one management unit among the plurality of management units, by using a virtual operation time, for each management unit, derived from the actual operation time.

FIG. 22

**Description**

TECHNICAL FIELD

The present invention relates to a work machine maintenance management system, a work machine maintenance management method, and a work machine maintenance management program that are used to perform management pertaining to maintenance of a work machine including a plurality of management units.

BACKGROUND ART

Patent Literature 1 discloses setting a timing of next maintenance or parts replacement, based on a value of an integrated hour meter (hour meter) that measures an integrated time obtained by integrating an operation time of a component, such as an engine or the like mounted on a work vehicle, that is involved in operation.

CITATION LIST

Patent Literature

Patent Literature 1: Patent No. 6126029

DISCLOSURE OF INVENTION

PROBLEMS TO BE SOLVED BY THE INVENTION

The setting of a maintenance timing based on hour meter values described in Patent Literature 1 is based on an assumption that the work vehicle performs average driving and work. However, when a work environment, an operation method for the work vehicle, or the like is different, there is a large difference in a degree of wear and tear of a predetermined portion of the work vehicle even for the same operation time in some cases. Therefore, it is difficult to accurately set the maintenance timing for each portion of the work vehicle using the method of setting the maintenance timing, based on only the value of the hour meter.

It is an object of the present invention to provide a work machine maintenance management system, a work machine maintenance management method, and a work machine maintenance management program that make it easy to accurately set a maintenance timing for each portion of the work machine.

MEANS FOR SOLVING THE PROBLEMS

A work machine maintenance management system according to one aspect of the present invention includes an acquisition unit and an output unit. The acquisition unit acquires an actual operation time of a target work machine including a plurality of management units. The output unit outputs maintenance information related to a maintenance timing for at least one management unit among the plurality of management units using a virtual operation time for each of the management units derived from the actual operation time.

A work machine maintenance management method according to another aspect of the present invention includes acquiring an actual operation time of a target work machine including a plurality of management units, and outputting maintenance information. For the maintenance information, the maintenance information related to the maintenance timing for at least one management unit among the plurality of management units is output using a virtual operation time for each of the management units derived from the actual operation time.

A work machine maintenance management program according to another aspect of the present invention is a program for causing one or more processors to execute a process including achieving an actual operation time of a target work machine including a plurality of management units, and outputting maintenance information. For the maintenance information, the maintenance information related to the maintenance timing for at least one management unit among the plurality of management units is output using a virtual operation time for each of the management units derived from the actual operation time.

BRIEF DESCRIPTION OF DRAWINGS

[FIG. 1] FIG. 1 is a schematic diagram illustrating a configuration of an operation evaluation system to which a virtual operation time calculation device according to one embodiment of the present invention is applied.
[FIG. 2] FIG. 2 is a block diagram illustrating an electrical configuration of a work vehicle, a service terminal, and a server.
[FIG. 3] FIG. 3 is a schematic table illustrating an example of contents of a portion table.
[FIG. 4] FIG. 4 is a schematic table illustrating an example of contents of a basic coefficient table.
[FIG. 5] FIG. 5 is a schematic table illustrating an example of contents of a portion-dependent coefficient calculation expression table.
[FIG. 6] FIG. 6 is a graph representing a standard normal distribution.
[FIG. 7] FIG. 7 is a schematic table illustrating probability ranges and random variable ranges corresponding to class numbers.
[FIG. 8] FIG. 8 is a schematic table illustrating an example of contents of a random variable threshold table.
[FIG. 9] FIG. 9 is a flowchart illustrating a procedure of a virtual operation time calculation processing executed by a virtual operation time calculation unit.
[FIG. 10] FIG. 10 is a schematic table illustrating that, for a model YH1111, actual operation time and operation condition information during a period of interest are calculated for each of a plurality of combines belonging to the model YH1111 by processing of S1 and S2 of FIG. 9.

[FIG. 11] FIG. 11 is a schematic table illustrating a probability range and an x value range corresponding to each class number.

[FIG. 12] FIG. 12 is a schematic table illustrating an example of classification results for basic coefficients A, B, C, and D for a combine whose model is YH1111 and whose machine number is 2A1.

[FIG. 13] FIG. 13 is a schematic diagram illustrating an example of the basic coefficient calculated for each of the basic coefficients A, B, C, and D of a combine whose model is YH1111 and whose machine number is 2A1.

[FIG. 14] FIG. 14 is a schematic table illustrating an example of portion-dependent coefficients for target portions of the combine in a case where the basic coefficients A, B, C and D of the combine whose model is YH1111 and whose machine number is 2A1 are the coefficients illustrated in FIG. 12.

[FIG. 15] FIG. 15 is a schematic table illustrating an example of contents of the portion-dependent virtual operation time of target portions of the work vehicle in a case where the portion-dependent coefficients of the combine whose model is YH1111 and whose machine number is 2A1 are the coefficients illustrated in FIG. 14.

[FIG. 16] FIG. 16 is a schematic table illustrating a specific example of a portion table for a predetermined model of combine.

[FIG. 17] FIG. 17 is a schematic table illustrating a specific example of a basic coefficient table for a predetermined model of combine.

[FIG. 18] FIG. 18 is a schematic table illustrating a specific example of a portion-dependent coefficient calculation expression table for a predetermined model of combine.

[FIG. 19] FIG. 19 is a schematic view of an example of a totalization condition input screen displayed on a service terminal.

[FIG. 20] FIG. 20 is a schematic table of an example of an output screen displayed on the service terminal.

[FIG. 21] FIG. 21 is a schematic view of another example of the output screen displayed on the service terminal.

[FIG. 22] FIG. 22 is a schematic diagram illustrating a configuration of a maintenance management system according to a first embodiment of the present invention.

[FIG. 23] FIG. 23 is a schematic table illustrating a specific example of a maintenance table.

[FIG. 24] FIG. 24 is a schematic table illustrating a specific example of a reference source table.

[FIG. 25] FIG. 25 is a schematic table illustrating a specific example of a virtual time table.

[FIG. 26] FIG. 26 is a schematic view illustrating an example of an output screen displayed on a display device.

[FIG. 27] FIG. 27 is a schematic view illustrating another example of the output screen displayed on the display device.

[FIG. 28] FIG. 28 is a schematic view illustrating yet another example of the output screen displayed on the display device.

[FIG. 29] FIG. 29 is a flowchart illustrating a procedure for a maintenance management method executed by a maintenance management system.

[FIG. 30] FIG. 30 is a schematic view illustrating an example of an output screen displayed on a display device in a maintenance management system according to a second embodiment of the present invention.

DESCRIPTION OF EMBODIMENTS

Embodiments of the present invention will be described below with reference to the accompanying drawings. The embodiments described below are examples of embodiments of the present invention and are not intended to limit the technical scope of the present invention.

(First Embodiment)

[1] Virtual Operation Time Calculation Device

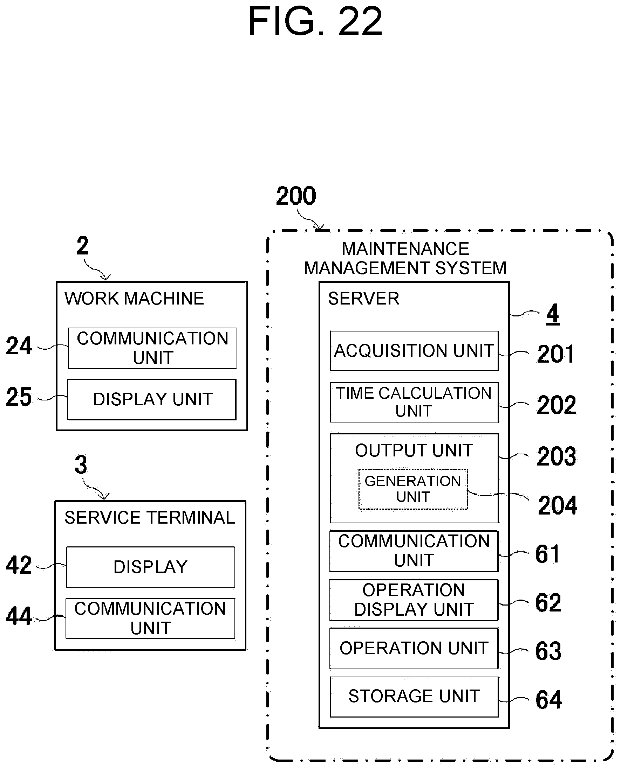

First, a time calculation unit 202 (see FIG. 22) used in a work machine maintenance management system 200 (see FIG. 22) according to this embodiment will be described. The time calculation unit 202 calculates a virtual operation time for each management unit of a target work machine. The time calculation unit 202 is realized by a virtual operation time calculation device that will be described below.

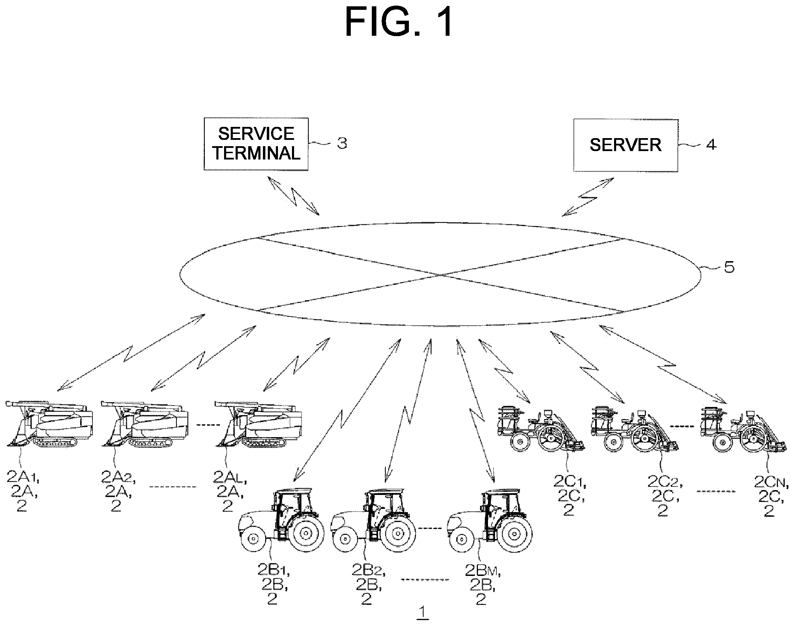

FIG. 1 is a schematic diagram illustrating a configuration of an operation evaluation system to which a virtual operation time calculation device according to one embodiment of the present invention is applied.

An operation evaluation system 1 includes a plurality of work vehicles 2, a service terminal 3 installed at a service base, and a server 4 as a virtual operation time calculation device.

The service terminal 3 is installed at a service base (service shop) where maintenance of the work vehicle 2 is performed. In FIG. 1, only one service terminal 3 is illustrated, but there are actually a plurality of service terminals 3 because there are actually a plurality of service shops that perform maintenance on the work vehicles 2. The server 4 is located in a predetermined management center.

Each of the work vehicles 2 can communicate with the server 4 via a communication network 5. Also, the service terminal 3 can communicate with the server 4 via the communication network 5.

The plurality of work vehicles 2 include, for example, a plurality of combines 2A whose model is YH1111, a plurality of tractors 2B whose model is YT2222, and a plurality of rice transplanters 2C whose model is YR3333. The plurality of combines 2A whose model is YH1111 include a plurality of combines $2A_1$, $2A_2$, ..., $2A_L$ with different machine numbers.

The plurality of tractors 2B whose model is YT2222 include a plurality of tractors $2B_1$, $2B_2$, ..., $2B_M$ with different machine numbers.

The plurality of rice transplanters 2C whose model is YR3333 include a plurality of rice transplanters $2C_1$, $2C_2$, ..., $2C_N$ with different machine numbers.

Each of the work vehicles 2 includes a function that positions a position of the work vehicle 2 using a positioning satellite (not illustrated). Each of the work vehicles 2 transmits information (hereinafter referred to as "vehicle-side information") including vehicle identification information (in this example, the model and machine number of the work vehicle 2), position information, and operation information to the server 4.

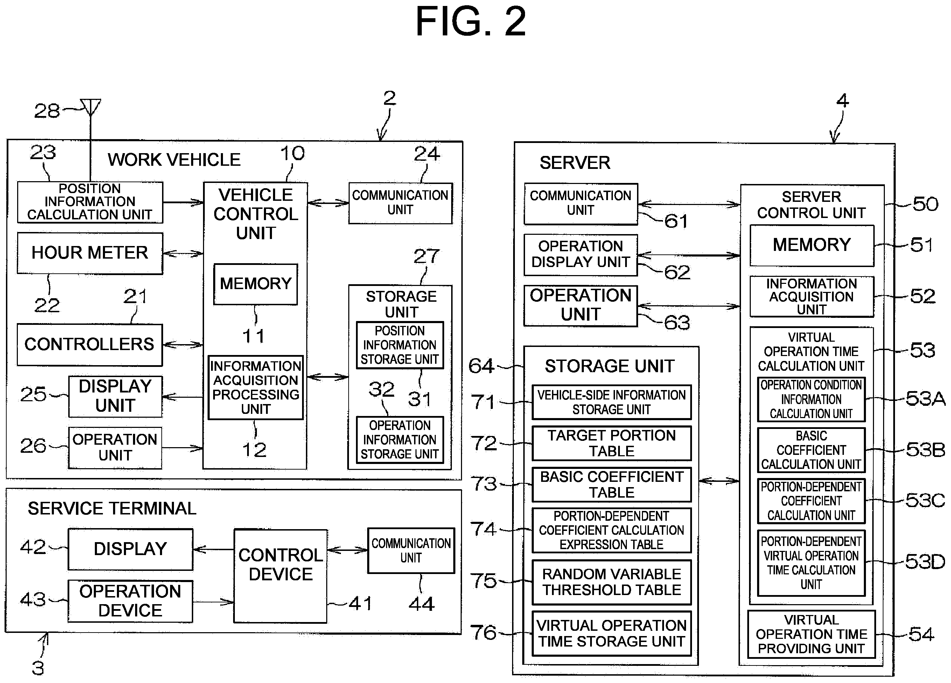

FIG. 2 is a block diagram illustrating an electrical configuration of the work vehicle 2, the service terminal 3, and the server 4.

The work vehicle 2 includes a vehicle control unit 10. The vehicle control unit 10 includes a microcomputer including a CPU and a memory (volatile memory, non-volatile memory, or the like) 11. The vehicle control unit 10 controls an operation of the work vehicle 2 (forward, backward, stop, turn, and other operations). A plurality of controllers (controllers 21) used for controlling various parts of the work vehicle 2 are electrically connected to the vehicle control unit 10.

In a case where the work vehicle 2 is a combine 2A, the plurality of controllers include an engine controller that controls engine speed and the like, a traveling controller that controls a crawler that is a traveling portion, a work controller that controls a work unit, such as a reaping portion, a threshing portion, and the like.

In a case where the work vehicle 2 is a tractor 2B, the plurality of controllers include an engine controller that controls engine speed and the like, a vehicle speed controller that controls vehicle speed of the tractor 2B, a steering controller that controls a steering angle of a front wheel of the tractor 2B, a PTO shaft controller that controls rotation of a PTO shaft, and the like.

In a case where the work vehicle 2 is a rice transplanter 2C, the plurality of controllers include, in addition to the engine controller, the vehicle speed controller, and a steering controller, a lifting and lowering controller that controls lifting and lowering of a planting unit, a PTO shaft controller that rotates and drives or stops a planting input case of the planting unit, and the like.

The vehicle control unit 10 is further connected to an hour meter 22, a position information calculation unit 23, a communication unit 24, a display unit 25, an operation unit 26, a storage unit 27, and the like. The hour meter 22 measures an integrated value of a time from when the engine of the work vehicle 2 is turned on to when it is turned off (total actual operation time).

A satellite signal reception antenna 28 is electrically connected to the position information calculation unit 23. The satellite signal reception antenna 28 receives signals from positioning satellites (not illustrated) forming a satellite positioning system. The satellite positioning system is, for example, a global navigation satellite system (GNSS). The position information calculation unit 23 calculates a position of the work vehicle 2 (that is, strictly, the satellite signal reception antenna 28), based on positioning signals received by the satellite signal reception antenna 28. Specifically, the position information calculation unit 23 generates positioning information including time information and position information. The position information is formed of, for example, latitude information and longitude information.

The communication unit 24 is a communication interface used for causing the vehicle control unit 10 to communicate with the server 4 via the communication network 5. The display unit 25 is formed of, for example, a liquid crystal display. A plurality of levers, switches, and the like are provided in the operation unit 26.

The storage unit 27 is formed of a storage device, such as a non-volatile memory or the like. The storage unit 27 is provided with a position information storage unit 31, an operation information storage unit 32, and the like.

The vehicle control unit 10 includes an information acquisition processing unit 12. The information acquisition processing unit 12 acquires position information calculated at every predetermined time by the position information calculation unit 23 during a period from when the engine is turned on to when it is turned off and stores the position information in the position information storage unit 31. In addition, the information acquisition processing unit 12 acquires operation information given by the vehicle control unit 10 at every predetermined time during the period from when the engine is turned on and to when it is turned off and stores the operation information in the operation information storage unit 32. The operation information includes on and off information of one or more members to be turned on and off that is set according to each model and analog information that is one or more measured values or detected values that are set according to each model. The member to be turned on and off includes various types of clutches. The analog information includes the total actual operation time measured by the hour meter 22 (hereinafter referred to as an "hour meter value"), an engine load factor, vehicle speed, water temperature of engine cooling water, fuel consumption rate, and the like.

The information acquisition processing unit 12 transmits the position information for each time point stored in the position information storage unit 31 and the operation information for each time point stored in the operation information storage unit 32 together with the vehicle identification information (model and machine number) to the server 4 at a predetermined timing (for example, a timing at which an off operation of a power key is performed). That is, vehicle-side information formed of vehicle identification information and position information and operation information at each time point is transmitted from the work vehicle 2 to the server 4.

The service terminal 3 is formed of a personal computer (PC) and includes a control unit (PC main body) 41, a display 42, an operation device 43, such as a mouse, a keyboard, and the like, and a communication unit 44. The communication unit 44 is a communication interface used for causing the control unit 41 to communicate with the server 4 via the communication network 5.

The control unit 41 includes a CPU, a memory, a hard disk, and the like, although not illustrated in the drawings. In the hard disk, in addition to an operating system (OS), a program, such as a browser used for viewing web pages or the like, and other necessary data are stored.

The server 4 includes a server control unit 50. A communication unit 61, an operation display unit 62, an operation unit 63, a storage unit 64, and the like are connected to the server control unit 50. The communication unit 61 is a communication interface used for causing the server control unit 50 to communicate with the vehicle control unit 10 of each of the work vehicles 2 and the control unit 41 of the service terminal 3 via the communication network 5. The operation display unit 62 is formed of, for example, a touch panel display. The operation unit 63 includes, for example, a keyboard, a mouse, and the like. The storage unit 64 is formed of a storage device, such as a hard disk, a non-volatile memory, or the like.

The storage unit 64 is provided with a vehicle-side information storage unit 71, a portion table 72, a basic coefficient table 73, a portion-dependent coefficient calculation expression table 74, a random variable threshold table 75, a virtual operation time storage unit 76, and the like.

In the vehicle-side information storage unit 71, the position information and the operation information for each time point received from the vehicle control unit 10 of the work vehicle 2 are stored in association with the vehicle identification information received from the vehicle control unit 10.

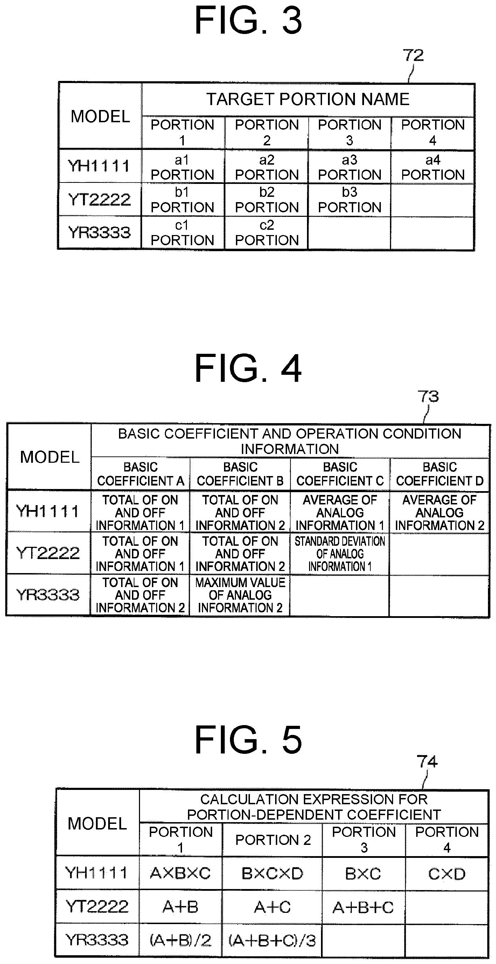

FIG. 3 is a schematic table illustrating an example of contents of the portion table 72.

In the portion table 72, for each model, a portion (target portion) for which the virtual operation time is to be calculated is stored. In the example of FIG. 3, four portions are stored as target portions for the model YH1111. For the model YT2222, three portions are stored as target portions. For YR3333, two portions are stored as target portions.

FIG. 4 is a schematic table illustrating an example of contents of the basic coefficient table 73.

In the basic coefficient table 73, for each model, types of basic coefficients necessary for calculating the virtual operation time and operation condition information used for calculating each of the basic coefficients are stored. In the example of FIG. 4, four types of basic coefficients A to D and four operation condition information used for calculating the basic coefficients A to D are stored for the model YH1111. The operation condition information used for calculating the basic coefficients A to D is a "total of on and off information 1," a "total of on and off information 2," an "average of analog information 1," and an "average of analog information 2."

For the model YT2222, three types of basic coefficients A to C and the operation condition information used for calculating the basic coefficients A to C are stored. The operation condition information used for calculating the basic coefficients A to C is a "total of on and off information 1," a "total of on and off information 2," and a "standard deviation of analog information 1."

For the model YR3333, two types of basic coefficients A and B and the operation condition information used for calculating the basic coefficients A and B are stored. The operation condition information used for calculating the basic coefficients A and B is a "total of on and off information 2," and a "maximum value of analog information 2."

A "ratio of a total number of times predetermined on and off information is turned on during a certain period to the actual operation time during the period" or a "ratio of a total of an on time of the predetermined on and off information during a certain period to the actual operation time during the period" may be used as the operation condition information. That is, the operation condition information is formed of a basic statistical amount of predetermined operation information (total, average, standard deviation, minimum value, maximum value, median value, most frequent value, or the like), a ratio of the basic statistical value of the predetermined operation information during a certain period to the actual operation time during the period, or the like.

Numbers of the on and off information 1 and the on and off information 2 and numbers of the analog Information 1 and the analog information 2 are numbers used for distinguishing operation information in the same model, and have no relevance between different models. For example, the on and off information 1 of the model YH1111 and the on and off information 1 of the model YT2222 are not necessarily the same type of information. The same applies to the basic coefficients A to D.

In the following, the operation information that is a source of calculation of the operation condition information is referred to as "source information" in some cases. For example, the source information for the "total of on and off information 1" is the on and off information 1. The source information of the "average of analog information 1" is the analog information 1.

FIG. 5 is a schematic table illustrating an example of contents of the portion-dependent coefficient calculation expression table 74.

The portion-dependent coefficient calculation expression table 74 stores, for each model, a calculation expression of the portion-dependent coefficient used for calculating the virtual operation time for each target portion.

In the example of FIG. 5, the portion-dependent coefficient calculation expression for each of a portion 1, a portion 2, a portion 3, and a portion 4 of the model are stored for the model YH1111. The portion-dependent coefficient calculation expression is expressed using all or some of the basic coefficients A to D of the corresponding model. For the model YT2222, the portion-dependent coefficient calculation expression for each of the portion 1, the portion 2, and the portion 3 of the model are stored. For the model YR3333, the portion-dependent coefficient calculation expression for each of the portion 1 and the portion 2 of the model are stored.

The random variable threshold table 75 will be described. The random variable threshold table 75 stores one or more random variable thresholds used for dividing a distribution area of a standard normal distribution into a predetermined number of classes.

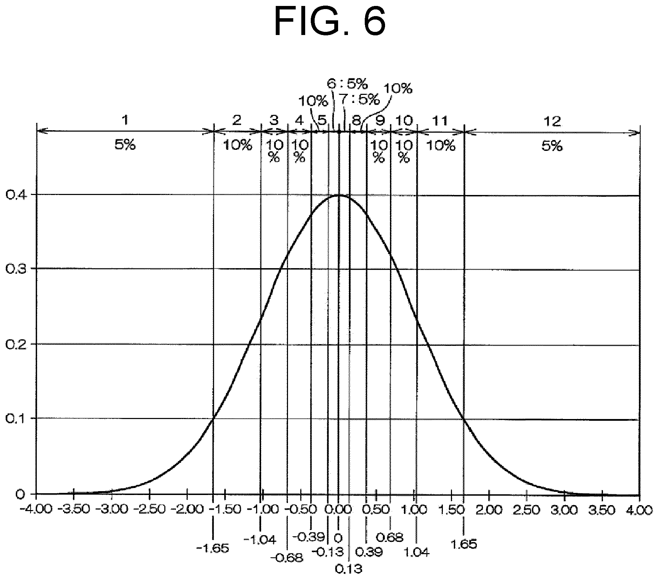

FIG. 6 is a graph representing a standard normal distribution. The standard normal distribution is a normal distribution with a mean of zero and a variance of one. In FIG. 6, the abscissa represents a random variable z and the ordinate represents a probability density.

In this embodiment, the entire distribution is divided into twelve classes $CL_1$ to $CL_{12}$ using eleven random variable thresholds $z_1$ to $z_{11}$, as illustrated in FIG. 6. FIG. 6 illustrates the eleven random variable thresholds $z_1$ to $z_{11}$, respective numbers 11 to 12 of the classes $CL_1$ to $CL_{12}$ and a ratio [%] of a portion corresponding to each class to an area of the entire distribution (hereinafter referred to as an "overall area").

In the following, a range from a ratio [%] of an area from a minimum value of the random variable (-4.00) to a lower limit value of the random variable in a certain class to the overall area to a ratio [%] of an area from a minimum value of the random variable (-4.00) to an upper limit of the random variable in the class to the overall area is referred to as a "probability range."

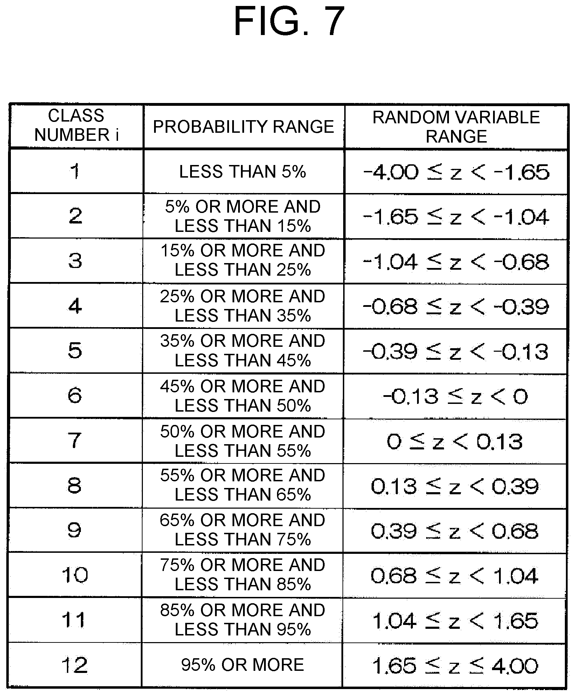

FIG. 7 illustrates the probability range and the random variable range corresponding to a number i (i = 1, 2, 3, ..., 11, 12) of each class.

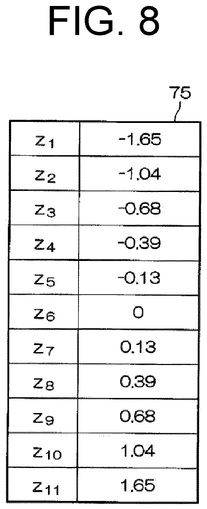

In the random variable threshold table 75, as illustrated in FIG. 8, values of the eleven random variable thresholds $z_1$ to $z_{11}$ are stored.

In the virtual operation time storage unit 76, the virtual operation time calculated for each target portion for each period, each model, and each machine number is stored.

The server control unit 50 includes a microcomputer including a CPU and memory (ROM, RAM, or the like) 51. The server control unit 50 includes an information acquisition unit 52, a virtual operation time calculation unit 53, and a virtual operation time providing unit 54.

The virtual operation time providing unit 54 is an example of an "output screen generation unit" of the present invention.

When the information acquisition unit 52 receives the position information and the operation information for each time point together with the vehicle identification information from the work vehicle 2, the information acquisition unit 52 stores the position information and the operation information for each time point that have been received in the vehicle-side information storage unit 71 in association with the received vehicle identification information.

The virtual operation time calculation unit 53 calculates, for each model and for each work vehicle 2, the virtual operation time within a predetermined period for each of the predetermined one or more target portions set for each model. Focusing on a predetermined one work vehicle 2 among a plurality of predetermined work vehicles belonging to a predetermined model, the virtual operation time calculation unit 53 calculates the virtual operation time for a predetermined period for each of the predetermined one or more target portions in the work vehicle of interest of the model. The predetermined period is, for example, a yearly period or a monthly period.

The virtual operation time calculation unit 53 includes an operation condition information calculation unit 53A, a basic coefficient calculation unit 53B, a portion-dependent coefficient calculation unit 53C, and a portion-dependent virtual operation time calculation unit 53D. For convenience of description, in the following, a case where the virtual operation time is calculated for a target portion of a certain work vehicle (work vehicle of interest) belonging to a certain model (model of interest) during a certain predetermined period (period of interest).

The operation condition information calculation unit 53A calculates a plurality of pieces of predetermined operation condition information (see FIG. 4) for each of a plurality of work vehicles 2 belonging to the model of interest, based on the operation information of the plurality of work vehicles 2 belonging to the model of interest including the work vehicle of interest during the period of interest.

Based on the plurality of pieces of operation condition information calculated for each of the plurality of work vehicles belonging to the model of interest, the basic coefficient calculation unit 53B calculates, for each piece of operation condition information of the work vehicle of interest, a plurality of basic coefficients (see FIG. 4) used for calculating the virtual operation time of the work vehicle of interest by comparing the operation condition information to the operation condition information of the plurality of work vehicles belonging to the model of interest as a whole.

In this embodiment, the basic coefficient calculation unit 53B divides the distribution area of the normal distribution into a plurality of classes for each piece of operation condition information of the work vehicle of interest, as assuming that the distribution of the operation condition information across the plurality of work vehicles belonging to the model of interest follows a normal distribution, determines a class to which the operation condition information of the work vehicle of interest belongs, and calculates a basic coefficient, based on the determined class.

The portion-dependent coefficient calculation unit 53C calculates a portion-dependent coefficient for each target portion in the work vehicle of interest, based on a plurality of types of basic coefficients and a portion-dependent coefficient calculation expression (see FIG. 5) set in advance for each target portion in advance.

The portion-dependent virtual operation time calculation unit 53D calculates the virtual operation time for each target portion by multiplying the actual operation time of the work vehicle of interest during the period of interest by the portion-dependent coefficient for each target portion. The portion-dependent virtual operation time calculation unit 53D then stores the calculated virtual operation time for each target portion in the virtual operation time storage unit 76, as the virtual operation time for each target portion of the work vehicle of interest of the model of interest during the period of interest.

The virtual operation time providing unit 54 acquires a virtual operation time in accordance with conditions input from the service terminal 3 from the virtual operation time storage unit 76 and provides the virtual operation time to the service terminal 3. This allows an operator of the service terminal 3 to acquire a necessary virtual operation time from the server 4 and display the necessary virtual operation time on the service terminal 3.

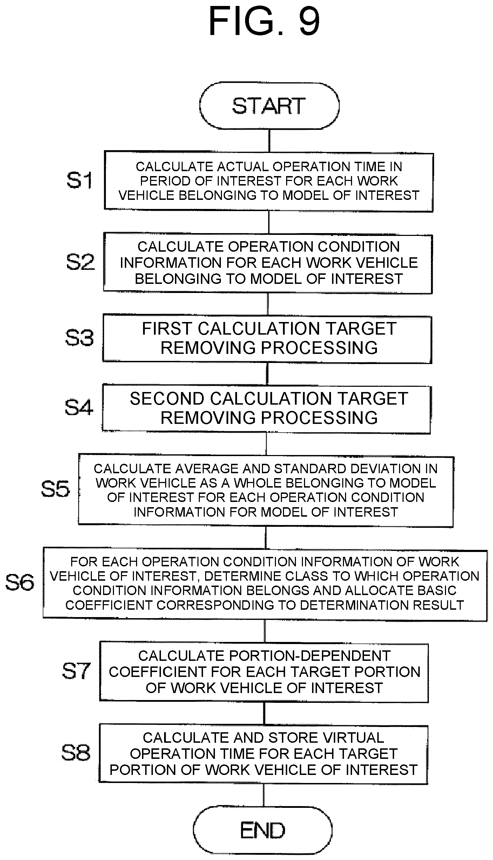

FIG. 9 is a flowchart illustrating a procedure of virtual operation time calculation processing executed by the virtual operation time calculation unit 53.

Herein, in order to facilitate understanding, a case where the virtual operation time for each target portion during the period of interest for the work vehicle of interest belonging to the model of interest is described.

The operation condition information calculation unit 53A in the virtual operation time calculation unit 53 calculates the actual operation time during the period of interest, based on an hour meter value in the operation information for each work vehicle 2 belonging to the model of interest (Step S1). Specifically, the operation condition information calculation unit 53A calculates the actual operation time during the period of interest by subtracting a minimum value from a maximum value of the hour meter value during the period of interest for each work vehicle 2 belonging to the model of interest.

Next, the operation condition information calculation unit 53A calculates, for each work vehicle 2 belonging to the model of interest, the operation condition information (see FIG. 4) corresponding to the model of interest, based on the source information (operation information) corresponding to the model of interest in the operation information (Step S2).

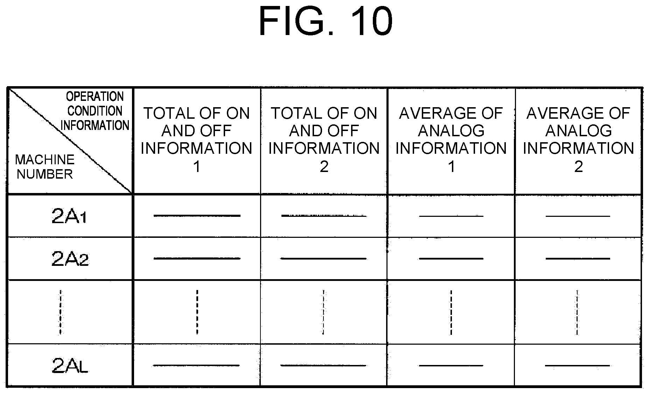

For example, if the model of interest is YH1111, as illustrated in FIG. 10, by processing of each of Step S1 and Step S2, the actual operation time during the period of interest and the operation condition information in accordance with the model YH1111 for each of the combines $2A_1$, $2A_2$, ..., $2A_L$ belonging to the model YH1111. The operation condition information in accordance with the model YH1111 is the total of on and off information 1 during the period of interest, the total of on and off information 2 during the period of interest, the average of analog information 1 during the period of interest, and the average of analog information 2 during the period of interest. In FIG. 10, for convenience of description, the machine numbers of the combines $2A_1$, $2A_2$, ..., and $2A_L$ are denoted by $2A_1$, $2A_2$, ..., and $2A_L$, respectively.

Next, the basic coefficient calculation unit 53B in the virtual operation time calculation unit 53 performs processing to obtain an average $\mu$ and a standard deviation $\sigma$ in the model of interest as a whole for each piece of operation condition information for the model of interests (Steps S3 to S5).

Specifically, the basic coefficient calculation unit 53B first performs first calculation target removing processing (Step S3). More specifically, the basic coefficient calculation unit 53B removes a work vehicle whose actual operation time during the period of interest is equal to or less than a predetermined time among all of the work vehicles 2 belonging to the model of interest from targets of calculation of mean and standard deviation of all operation condition information for the model of interest.

Next, the basic coefficient calculation unit 53B performs a second calculation target removing processing (Step S4). Specifically, for each piece of operation condition information for the model of interest, the basic coefficient calculation unit 53B arranges the operation condition information of all of the work vehicles belonging to the model of interest (excluding those removed from calculation targets in Step S3) in an ascending order from a smallest one. Then, the operation condition information in lower $\alpha$% and the operation condition information in upper 6% are removed from calculation targets for calculation of the mean and standard deviation of the operation condition information. For example, if it is assumed that there are twenty vehicles belonging to the model of interest and both $\alpha$ and 6 are 10%, for certain operation condition information, the operation condition information of lower two vehicles and the operation condition information of upper two vehicles are removed from the calculation targets for calculation of the mean and standard deviation of the operation condition information.

Then, for each piece of operation condition information for the model of interest, the basic coefficient calculation unit 53B calculates the average $\mu$ and the standard deviation $\sigma$ for the work vehicles belonging to the model of interest as a whole with the information that has not been removed in Step S3 and Step S4 (Step S5).

Next, for each piece of operation condition information of the work vehicle of interest, the basic coefficient calculation unit 53B determines a class to which the operation condition information belongs using the mean $\mu$ and the standard deviation $\sigma$ of the operation condition information calculated in Step S5 and the standardization expression and allocates a basic coefficient in accordance with a result of determination (Step S6).

A case where the class to which the certain operation condition information of the work vehicle of interest (operation condition information of interest) belongs is determined and the basic coefficient in accordance with the result of determination is allocated to the operation condition information of interest will be specifically described. The basic coefficient calculation unit 53B calculates a classification threshold used for classifying the operation condition information of interest using the mean $\mu$ and the standard deviation $\sigma$ of the operation condition information of interest and the random variable thresholds $z_1$ to $z_{11}$ stored in the random variable threshold table 75 (see FIG. 8).

If it is assumed that the operation condition information of interest is x and the mean and the standard deviation of the operation condition information corresponding to the operation condition information of interest x in the entire model of interest are $\mu$ and $\sigma$, respectively, an expression used for standardizing the operation condition information of interest x is expressed by the following equation (1).

$$z = x - \mu/\sigma \dots (1)$$

Based on the equation (1), the classification threshold $x_i$ for classifying the operation condition information of interest x is expressed by the following equation (2).

$$x_i = \sigma z_i + \mu \dots (2)$$

The basic coefficient calculation unit 53B calculates the classification thresholds $x_1$ to $x_{11}$ corresponding to the random variable thresholds $z_1$ to $z_{11}$ by substituting the random variable thresholds $z_1$ to $z_{11}$ in the equation (2). As a result, the eleven classification thresholds $x_1$ to $x_{11}$ are obtained used for classifying the operation condition information of interest x into classes 1 to 12.

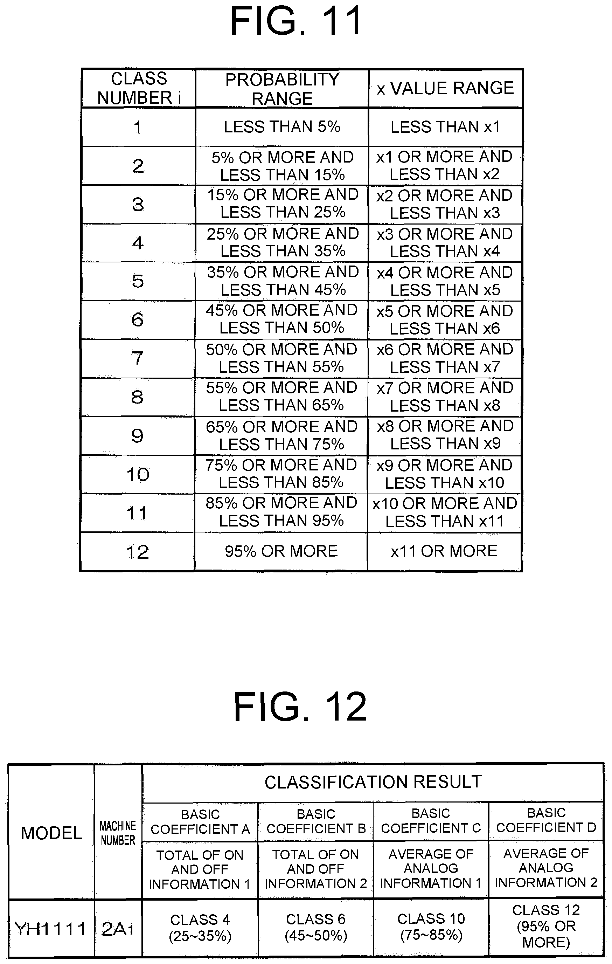

FIG. 11 is a schematic table illustrating a probability range and an x value range corresponding to each class number.

The basic coefficient calculation unit 53B determines, based on the classification thresholds $x_1$ to $x_{11}$, to which one of the classes 1 to 12 the operation condition information of interest x belongs. Then, the basic coefficient calculation unit 53B allocates the basic coefficient in accordance with a result of determination to the operation condition information of interest x.

Specifically, the basic coefficient calculation unit 53B obtains a basic coefficient k for the operation condition information of interest x, based on the following expression (3). i is a class number of a class to which the operation condition information of interest x is determined to belong. $\mu$ is an average of the operation condition information corresponding to the operation condition information of interest x for the model of interest as a whole.

$$
\begin{aligned}
&\text{If } i = 1, \text{ then } k = k_1 = x_1/\mu \\
&\text{If } i = 2, \text{ then } k = k_2 = x_2/\mu \\
&\text{If } i = 3, \text{ then } k = k_3 = x_3/\mu \\
&\text{If } i = 4, \text{ then } k = k_4 = x_4/\mu \\
&\text{If } i = 5, \text{ then } k = k_5 = x_5/\mu \\
&\text{If } i = 6, \text{ then } k = k_6 = x_6/\mu = 1 \\
&\text{If } i = 7, \text{ then } k = k_7 = x_6/\mu = 1 \\
&\text{If } i = 8, \text{ then } k = k_8 = x_7/\mu \\
&\text{If } i = 9, \text{ then } k = k_9 = x_8/\mu \\
&\text{If } i = 10, \text{ then } k = k_{10} = x_9/\mu \\
&\text{If } i = 11, \text{ then } k = k_{11} = x_{10}/\mu \\
&\text{If } i = 12, \text{ then } k = k_{12} = x_{11}/\mu \dots (3)
\end{aligned}
$$

A portion-dependent coefficient greater than 1 means that the target portion has been subjected to harsher use than average use, and a coefficient less than 1 means that the target portion has been subjected to gentler use than average use.

FIG. 12 illustrates an example of the classification results for each of the operation condition information corresponding to the basic coefficients A, B, C and D of a combine $2A_1$ whose model is YH1111 and whose machine number is $2A_1$. In FIG. 12, the probability range corresponding to the classification result is written in parentheses in order to make it easier to understand contents of the classification result.

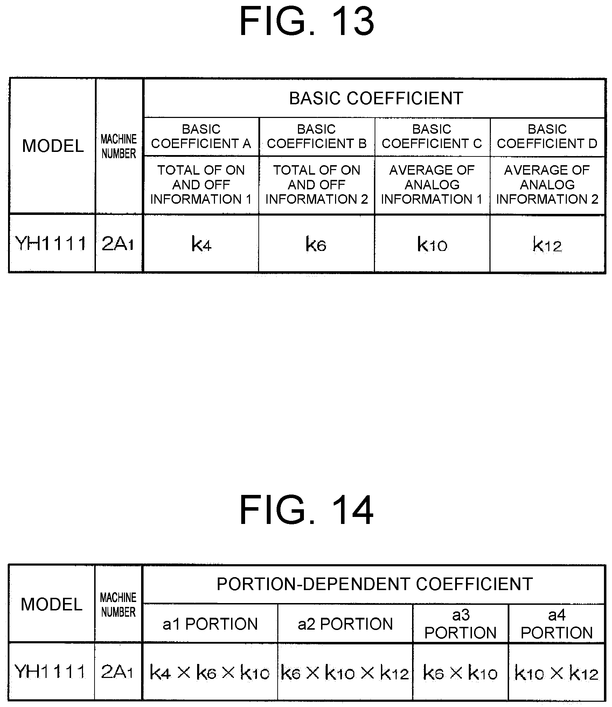

FIG. 13 is a schematic table illustrating an example of the basic coefficients calculated for the basic coefficients A, B, C and D of the combine $2A_1$ whose model is YH1111 and whose machine number is $2A_1$.

Next, the portion-dependent coefficient calculation unit 53C in the virtual operation time calculation unit 53 calculates a portion-dependent coefficient for each target portion of the work vehicle of interest (Step S7).

Specifically, the portion-dependent coefficient calculation unit 53C calculates a portion-dependent coefficient for each target portion of the work vehicle of interest, based on the basic coefficient calculated for each piece of operation condition information of the work vehicle of interest calculated in Step S6 and the portion-dependent coefficient calculation expression stored in the portion-dependent coefficient calculation expression table 74 (see FIG. 5).

For example, if the basic coefficients A, B, C and D of the combine $2A_1$ whose model is YH1111 and whose machine number is $2A_1$ are those illustrated in FIG. 13, the portion-dependent coefficients for the target portions of the work vehicle are those illustrated in FIG. 14.

Next, the portion-dependent virtual operation time calculation unit 53D in the virtual operation time calculation unit 53 calculates the virtual operation time for each target portion of the work vehicle of interest and stores the calculated virtual operation time, the portion-dependent coefficient used for calculating the virtual operation time, and the actual operation time during the period of interest in the virtual operation time storage unit 76 in association with the period of interest, the model of interest, and the machine number (Step S8).

Specifically, the portion-dependent virtual operation time calculation unit 53D calculates, for each target portion of the work vehicle of interest, the portion-dependent virtual operation time by multiplying an actual operation time h of the work vehicle of interest calculated in Step S1 by the portion-dependent coefficient of the target portion calculated in Step S8.

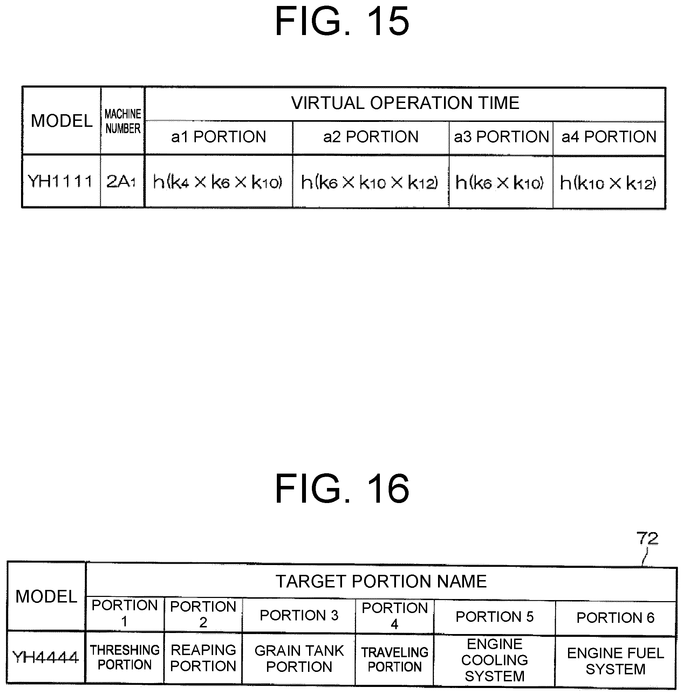

For example, if the portion-dependent coefficients of the combine $2A_1$ whose model is YH1111 and whose machine number is $2A_1$ are those illustrated in FIG. 14, the portion-dependent virtual operation time of each target portion of the work vehicle is as illustrated in FIG. 15.

An example of contents of the portion table 72, the basic coefficient table 73, and the portion-dependent coefficient calculation expression table 74 in a case where the model is a predetermined model of combine will be more specifically described. Herein, the predetermined model is, for example, YH4444.

FIG. 16 is a schematic table illustrating a specific example of the portion table 72 for the model YH4444. In the example of FIG. 16, six portions, that is, the threshing portion, the reaping portion, the grain tank portion (storage portion), the traveling portion, the engine cooling system, and the engine fuel system, are set as the target portions for the model YH4444.

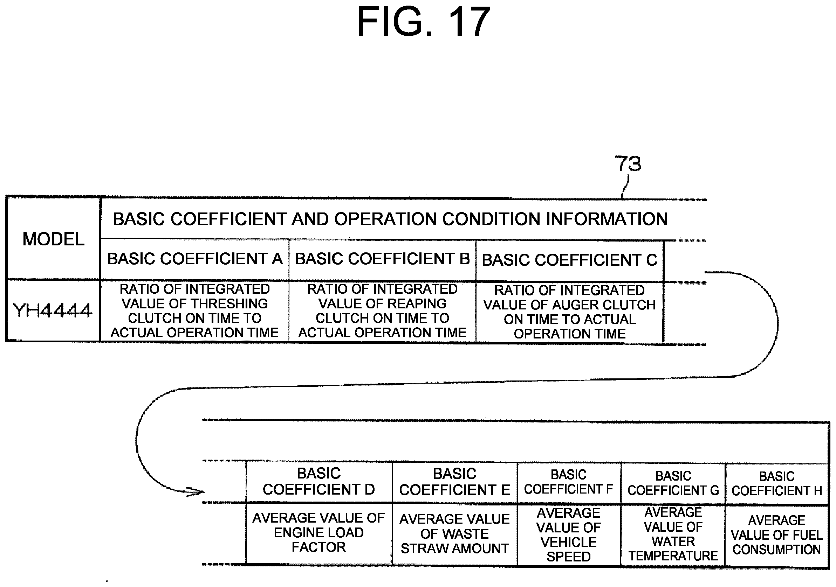

FIG. 17 is a schematic table illustrating a specific example of the basic coefficient table 73 for the model YH4444. In the example of FIG. 17, for the model YH4444, each of a ratio [%] of an integrated value of a threshing clutch on time to the actual operation time, a ratio [%] of an integrated value of a reaping clutch on time to the actual operation time, a ratio [%] of an integrated value of an auger clutch on time to the actual operation time, an average value of an engine load factor, an average value of a waste straw amount, an average value of vehicle speed, an average value of water temperature, and an average value of a fuel consumption rate is set as the operation condition information used for calculating the eight basic coefficients A to H, respectively.

The ratio of each of the integrated values of the threshing, reaping, and auger clutch on times to the actual operation time is the ratio of corresponding one of the integrated values of the threshing, reaping, and auger clutch on times during a predetermined period to the actual operation time during the predetermined period.

Source information of the eight-operation condition information is threshing clutch on and off information, reaping clutch on and off information, auger clutch on and off information, the engine load factor, the waste straw amount, the vehicle speed, the water temperature, and the fuel consumption rate.

Each of the threshing clutch on and off information, the reaping clutch on and off information, and the auger clutch on and off information is information indicating whether a corresponding one of a threshing clutch, a reaping clutch, and an auger clutch is turned on or off. The engine load factor is, for example, a ratio of a deviation between an actual fuel injection amount and a no-load fuel injection amount to a deviation between a maximum fuel injection amount and a no-load fuel injection amount.

The waste straw amount is an amount of waste straws that is conveyed by a waste straw conveying device of a combine per predetermined time. The vehicle speed is speed of the combine. The water temperature is temperature of engine cooling water. The fuel consumption rate is an amount of fuel consumed per predetermined time.

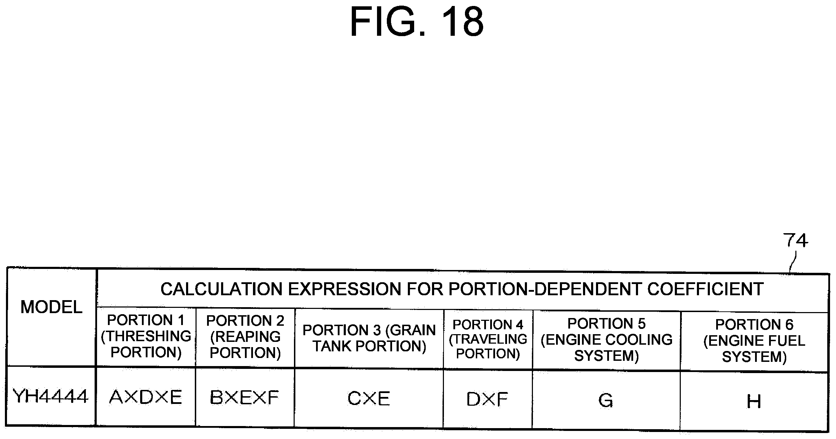

FIG. 18 is a schematic table illustrating a specific example of a portion-dependent coefficient calculation expression table 74 for model YH4444.

According to the example in FIG. 18, the portion-dependent coefficient for the threshing portion is a product of the basic coefficient A based on the ratio of the integrated value of the threshing clutch on time to the actual operation time, the basic coefficient D based on the average value of the engine load factor, and the basic coefficient E based on the average value of the waste straw amount.

The portion-dependent coefficient for the reaping portion is a product of the basic coefficient B based on the ratio of the integrated value of the reaping clutch on time to the actual operation time, the basic coefficient E based on the average value of the waste straw amount, and the basic coefficient F based on the average value of the vehicle speed.

The portion-dependent coefficient for the grain tank portion is a product of the basic coefficient C based on the ratio of the integrated value of the auger clutch on time to the actual operation time and the basic coefficient E based on the average value of the waste straw amount.

The portion-dependent coefficient for the traveling portion is a product of the basic coefficient D based on the average value of the engine load factor and the basic coefficient F based on the average value of the vehicle speed.

The portion-dependent coefficient for the engine cooling system is the basic coefficient G based on the average value of the water temperature.

The portion-dependent coefficient for the engine fuel system is the basic coefficient H based on the average value of the fuel consumption rate.

Next, a procedure performed in a case where an operator of the service terminal 3 (hereinafter referred to as a terminal operator) acquires the virtual operation time of each target portion in a work vehicle of a predetermined machine number of a predetermined model will be described.

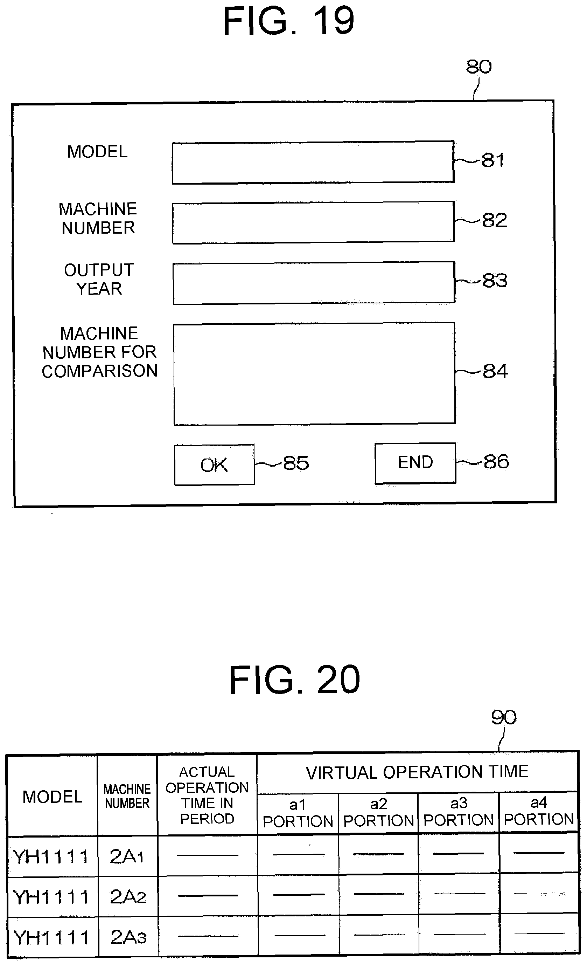

The terminal operator accesses a website provided by the server 4 and obtains a web page by operating the service terminal 3. The terminal operator logs in to the web page. Thus, for example, a totalization condition input screen 80 as illustrated in FIG. 19 is displayed on the service terminal 3.

The totalization condition input screen 80 displays, for example, a model input section 81, a machine number input section 82, an output year input section (period input section) 83, a machine-number-for-comparison input section 84, an OK button 85, and an end button 86.

The terminal operator inputs a desired model (hereinafter referred to as a target model), a machine number (hereinafter referred to as a target machine number), and an output year (hereinafter referred to as a target output year) to the model input section 81, the machine number input section 82, and the output year input section 83. If necessary, the machine number to be compared to the target machine number (hereinafter referred to as the machine number for comparison) is input to the machine-number-for-comparison input section 84. Thereafter, the terminal operator clicks the OK button 85. Thus, the totalization conditions input by the terminal operator are transmitted to the server 4.

When the virtual operation time providing unit 54 of the server 4 receives the totalization conditions input by the terminal operator, the virtual operation time providing unit 54 acquires the actual operation time, the portion-dependent coefficient, and the portion-dependent virtual time in the target output year of the target machine number from the virtual operation time storage unit 76. In a case where the machine number for comparison is included in the totalization conditions, the virtual operation time providing unit 54 acquires the actual operation time, the portion-dependent coefficient, and the portion-dependent virtual time in the target output year of the machine number for comparison from the virtual operation time storage unit 76. Then, the virtual operation time providing unit 54 generates an output screen 90, for example, as illustrated in FIG. 20 and provides the output screen 90 to the service terminal 3. Thus, the output screen 90 is displayed on the service terminal 3. FIG. 20 illustrates an example of an output screen in a case where the target model is YH1111 described above, the target machine number is 2A₁, and the machine numbers for comparison are 2A₂ and 2A₃.

The output screen 90 displays the model, the actual operation time during the period, and the portion-dependent virtual time for each target machine number and machine number for comparison. The output screen 90 allows the terminal operator to recognize, for each target portion, the virtual operation time obtained by adding a use state to the actual operation time. Thus, the terminal operator can properly set a maintenance timing, a parts replacement timing, or the like for each target portion.

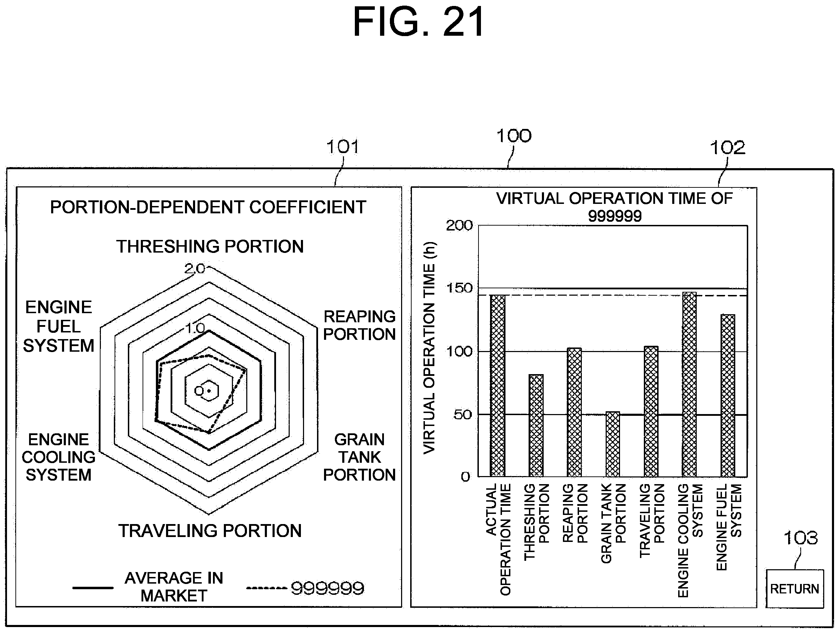

The virtual operation time providing unit 54 may be configured to display an output screen 100 as illustrated in FIG. 21. The output screen 100 includes a first graph 101, a second graph 102, a return button 103, and the like. FIG. 21 illustrates an example of the output screen in a case where the target model is YH4444 as described above and the target machine number is 999999.

The first graph 101 is a radar chart used for comparing an average portion-dependent coefficient (=1) in a case where the basic coefficients for the target model are all 1 to the portion-dependent coefficients in the target output year for the target machine number. The solid line graph represents the average portion-dependent coefficient (=1), and the dashed line graph represents the portion-dependent coefficient for the target machine number. Based on the first graph 101, the terminal operator can determine, for each target part, whether use of the target machine was harsh or moderate as compared to average use across the target model as a whole. Thus, the terminal operator can properly set a maintenance timing, a parts replacement timing, or the like for each target portion.

The second graph 102 is a bar graph representing the actual operation time and the portion-dependent virtual operation time in the target output year of the target machine number. Based on the second graph 102, the terminal operator can recognize, for each target part, the virtual operation time obtained by adding the use state to the actual operation time. Thus, the terminal operator can properly set a maintenance timing, a parts replacement timing, or the like for each target portion.

Although an embodiment of the invention has been described above, the invention can be further implemented in other embodiments.

In the above-described embodiment, the virtual operation time calculation unit 53 calculates the average and the standard deviation of the operation condition information after the first calculation target removing processing (Step S3 in FIG. 9A) and the second calculation target removing processing (Step S4 in FIG. 9A). However, the virtual operation time calculation unit 53 may be configured to calculate the average and the standard deviation of the operation condition information without performing either or both of the first calculation target removing processing and the second calculation target removing processing.

[2] Configuration of Maintenance Management System

Next, a configuration of the work machine maintenance management system 200 according to this embodiment (hereinafter simply referred to as the "maintenance management system 200") will be described.

The maintenance management system 200 is a system for performing management of maintenance of a target work machine on one of a plurality of work machines as a target (target work machine). Herein, the maintenance management system 200 performs management of maintenance of the target work machine by outputting, in particular, information on a maintenance timing as maintenance information. In this embodiment, the maintenance management system 200 uses the virtual operation time calculated by the virtual operation time calculation device (time calculation unit 202) described above to obtain the maintenance timing.

A "work machine" as used herein refers to various types of work machines, and one example thereof is the work vehicle 2, such as the combine 2A, the tractor 2B, the rice transplanter 2C, and the like. That is, the work machines include the work vehicle 2. The work machine is not limited to "vehicles," such as the combine 2A, the tractor 2B, the rice transplanter 2C, and the like but may also be, for example, a work flying body, such as a drone for spraying pesticides and the like. Furthermore, it is not required that the work machine includes an engine, and the work machine may include, for example, a motor, instead of an engine as a power source.

Also, the "target work machine" as used herein is a work machine that is a target of management of maintenance by the maintenance management system 200 among such work machines. In particular, in this embodiment, the maintenance management system 200 obtains the maintenance timing using the virtual operation time calculated by the virtual operation time calculation device described above. Therefore, the "work vehicle of interest" is the same as the "target work machine" in a case where the virtual operation time is calculated by focusing on a certain work vehicle (work vehicle of interest) as described in the "[1] Virtual Operation Time Calculation device" section. For this reason, in the following, the work machine and the target work machine are described with the same reference sign (2) as that of the work vehicle.

The "maintenance" as used herein is a work performed on the work machine 2 at a service base (service shop) or the like and includes, as an example, preparation, maintenance, conservation, inspection, adjustment, care, cleaning (sweeping), function checks, repair and replacement of parts, or the like of the machinery. In operating the work machine 2, it is preferable to perform appropriate maintenance on the work machine 2 at an appropriate timing. Therefore, the maintenance management system 200 of this embodiment outputs maintenance information related to a "maintenance timing" that is a timing at which it can be recommended to perform such maintenance or a timing at which it is essential to perform the maintenance, or the like. Therefore, a timing of parts replacement or the like described in the "[1] Virtual Operation Time Calculation Device" section is included in the "maintenance timing."

In this embodiment, each of the work machines 2, such as the target work machines 2 or the like, includes a plurality of management units. The "management unit" as used herein means a unit that is a target of management of maintenance by the maintenance management system 200, may be, for example, a portion (target portion) of the work machine 2, and may be a component (target part) into which the portion is further subdivided. As an example, in a case where the work machine 2 is the combine 2A, the work machine 2 includes six portions, that is, an engine, a traveling portion, a reaping portion, a threshing portion, a grain tank portion (storage portion), and an electric component. Therefore, if the management unit is a portion, the work machine 2 formed of the combine 2A includes the above-described six management units.

In this embodiment, as an example, the target work machine 2 has a plurality of portions, each of which includes one or more components. There is a one-to-one correspondence between a management unit and a component. In other words, in this embodiment, a "management unit" is a "component" obtained by further subdividing a "portion." As an example, in a case where the work machine 2 is a combine 2A, the "traveling portion" that is one of portions thereof includes six components, that is, a crawler, a bearing, a seal, a part A, a part B, and a part C. However, it is not required that each of the all portions included in the work machine 2 includes a plurality of components, and some portions may include only one component.

Then, the maintenance management system 200 of this embodiment outputs maintenance information related to the maintenance timing for at least one management unit among the plurality of management units using the virtual operation time for each management unit. The "virtual operation time for each management unit" is, as an example, the "virtual operation time for each target portion" calculated by the portion-dependent virtual operation time calculation unit 53D described in the "[1] Virtual Operation Time Calculation Device" section. That is, in a case where the management unit is a portion (target portion), the virtual operation time for each portion (target portion) is the virtual operation time for each management unit (portion-dependent virtual time).

In this embodiment, since the management unit is a component as described above, the virtual operation time of each component is used for outputting maintenance information related to the maintenance timing. However, in this case, the same (common) virtual operation time may be used between two or more components. That is, for example, the virtual operation time may be common for four components, that is, a "belt," a "filter," the "part A," and the "part B," included in the portion that is an "engine." In short, even the virtual operation time for each management unit may be common for the portion to which the component as a management unit belongs, and in this case, the virtual operation time for each component (management unit) is synonymous with the virtual operation time for each portion.

Specifically, the maintenance management system 200 of this embodiment includes an acquisition unit 201 and an output unit 203, as illustrated in FIG. 22. The acquisition unit 201 acquires the actual operation time of the target work machine 2 including a plurality of management units. The output unit 203 outputs maintenance information related to the maintenance timing for at least one management unit among the plurality of management units using the virtual operation time for each management unit derived from the actual operation time. In this embodiment, as an example, the acquisition unit 201 and the output unit 203 are provided in the server 4 that can communicate with each of the work machine (work vehicle) 2 and the service terminal 3.

According to this configuration, since maintenance information related to the maintenance timing is output using the virtual operation time for each management unit derived from the actual operation time of the target work machine 2, an appropriate maintenance timing (including a parts replacement timing) can be recognized based on the maintenance information. That is, since the virtual operation time is a time obtained by, for example, adding the use state of the target work machine to the actual operation time, it is made easier to reflect a more appropriate maintenance timing of the target work machine 2 in the maintenance information than in a case where the maintenance information is output using the actual operation time. Furthermore, since the maintenance information is information related to the maintenance timing for at least one management unit among the plurality of management units, it is possible to set the maintenance timing separately for each management unit even in one target work machine 2. Therefore, as compared to a case where a single maintenance timing is indicated for the entire target work machine 2 without distinction between management units, a more appropriate and accurate maintenance timing can be recognized for each management unit (portion or the like), based on the maintenance information. As a result, the maintenance management system 200 of this embodiment has an advantage that it is easy to accurately set the maintenance timing of each portion of the work machine 2.

Moreover, in this embodiment, since the management unit and the component are associated with one another in a one-to-one correspondence, it is possible to set the maintenance timing separately for each component even in one target work machine 2. Therefore, according to the maintenance management system 200, it is easy to accurately set the maintenance timing of each component of the work machine 2.

The "actual operation time" as used herein is a time during which the target work machine is actually in operation and is basically the operation time actually measured in the target work machine. As an example, the actual operation time is an integrated value (total actual operation time) of a time from when the engine of the target work machine is turned on to when it is turned off, that is, the hour meter value, measured by the hour meter 22, as described in the "[1] Virtual Operation Time Calculation Device" section. The actual operation time may be an integrated value of a time during which a specific portion (such as an electric component or the like) other than the engine of the target work machine is in operation and may be an integrated value of a time from when a power key of the target work machine is turned on to when it is turned off. Furthermore, the integrated value of a time during which at least one particular portion (such as the engine, the traveling portion, the reaping portion, the threshing portion, the grain tank portion, the electric component, or the like) of the target work machine is in operation may be the actual operation time.

The "virtual operation time" as used herein is derived from the actual operation time, that is, it is a virtual operation time for each management unit in the target work machine derived from the actual operation time of the target work machine acquired by the acquisition unit 201. In short, the virtual operation time may be a virtual time derived from the actual operation time, and may be the same as or different from the actual operation time.

In this embodiment, as an example, the virtual operation time is calculated by the virtual operation time calculation device (time calculation unit 202), but is not limited to this example and may be derived from the actual operation time by any appropriate means. For example, if the actual operation time and the virtual operation time are associated with one another in a form of a table or the like for each management unit, it is possible to derive the virtual operation time from the actual operation time using this correspondence. That is, if the correspondence between the actual operation time and the virtual operation time is known and is stored in a storage unit 64 or the like in advance, it is possible to derive the virtual operation time corresponding to this actual operation time from the actual operation time. Alternatively, if basic coefficients, the portion-dependent coefficients, or the like for the target work machine is stored in the storage unit 64 in advance, it is possible to derive the virtual operation time from the actual operation time using any one of these coefficients. That is, if the coefficients used for calculating the virtual operation time from the actual operation time are known, it is possible to derive the virtual operation time by multiplying the actual operation time by these coefficients.

In the following description, it is assumed that a period of interest for calculation of the virtual operation time is an entire period after a start of use of the target work machine with a time point of the start of use of the target work machine as a start point. In other words, each of the actual operation time and the virtual operation time during the period of interest corresponds to the total operation time of the target work machine, and the hour meter value measured by the hour meter 22 is the actual operation time during the period of interest as it is.

The configuration of the maintenance management system 200 according to this embodiment will be described in more detail below.

As illustrated in FIG. 22, the maintenance management system 200 further includes the time calculation unit 202 in addition to the acquisition unit 201 and the output unit 203. In this embodiment, as an example, the time calculation unit 202 is also provided in the server 4, similar to the acquisition unit 201 and the output unit 203. In other words, the maintenance management system 200 is realized by the server 4. In FIG. 22, as components of the server 4, in addition to the acquisition unit 201, the time calculation unit 202, and the output unit 203, only the communication unit 61, the operation display unit 62, the operation unit 63, and the storage unit 64 are illustrated and other components are not illustrated. Similarly, in FIG. 22, as components of the work machine (work vehicle) 2, only the communication unit 24 and the display unit 25 are illustrated, as components of the service terminal 3, only the display 42 and the communication unit 44 are illustrated, and other components are not illustrated.

In this embodiment, the acquisition unit 201 is embodied by one function of the information acquisition unit 52 in the server control unit 50. That is, when the information acquisition unit 52 receives the operation information from the work vehicle 2, the acquisition unit 201 acquires the actual operation time, based on the hour meter value included in the operation information. More in detail, since the target work machine (work vehicle) 2 transmits the vehicle-side information formed of the vehicle identification information, the position information at each time point, and the operation information to the server 4, the acquisition unit 201 acquires the actual operation time, based on the hour meter value included in the operation information.

Also, in this embodiment, the time calculation unit 202 is embodied by one function of the virtual operation time calculation unit 53 in the server control unit 50. That is, by calculating the virtual operation time for the target portion of the work vehicle of interest by the virtual operation time calculation unit 53, the time calculation unit 202 calculates the virtual operation time for each management unit of the target work machine (work vehicle of interest) 2. Strictly speaking, in this embodiment, since the "management unit" is a "component," the virtual operation time calculation unit 53 calculates the virtual operation time for each component, and thus, the time calculation unit 202 calculates the virtual operation time for each management unit (component) of the target work machine 2. Thus, the maintenance management system 200 can obtain the virtual operation time for each management unit by acquiring the actual operation time.

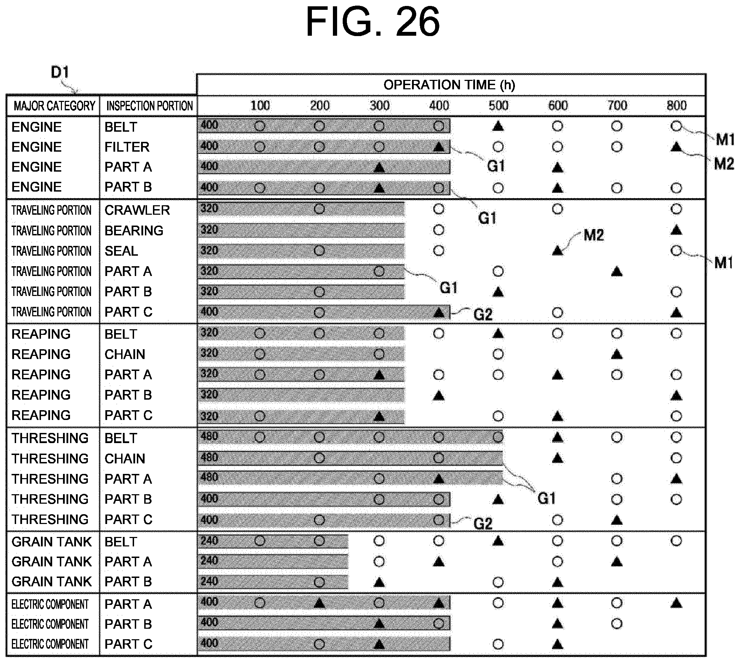

In this embodiment, the output unit 203 is embodied by one function of the virtual operation time providing unit 54 in the server control unit 50. That is, the virtual operation time providing unit 54 generates an output screen in accordance with conditions input from the service terminal 3 and causes the output screen to be displayed, and thus, the output unit 203 outputs the maintenance information related to the maintenance timing. In short, the output unit 203 in this embodiment outputs the maintenance information in a mode in which a screen, such as an output screen D1 (see FIG. 26) or the like, including the maintenance information is displayed on a display device. The output screen D1 including the maintenance information is displayed on a display device, such as, for example, the display 42 of the service terminal 3, the operation display unit 62 of the server 4, the display unit 25 of the work machine 2, or the like. The "screen" as used herein is an image (including pictures, texts, graphs, icons, or the like) that is projected on a display device. However, the mode of output of the maintenance information by the output unit 203 is not limited to display on the display device, but includes, for example, a lighting state of a lamp, a sound (including audio) output, printing, writing on a recording medium including the storage unit 64, transmission to an external terminal via communication, or the like.

The output unit 203 includes a generation unit 204, as illustrated in FIG. 22. The generation unit 204 generates maintenance information and further generates the output screen D1 or the like including the maintenance information. That is, the generation unit 204 generates maintenance information related to the maintenance timing for at least one management unit among the plurality of management units using the virtual operation time for each management unit derived from the actual operation time. Herein, the virtual operation time for each management unit used by the generation unit 204 to generate the maintenance information is the virtual operation time for each component calculated by the time calculation unit 202. The output unit 203 outputs the maintenance information generated by the generation unit 204.

The output unit 203 includes the generation unit 204, as illustrated in FIG. 22. The generation unit 204 generates the maintenance information and further generates the output screens D1 or the like including the maintenance information. That is, the generation unit 204 generates maintenance information related to the maintenance timing for at least one management unit among the plurality of management units using the virtual operation time for each management unit derived from the actual operation time. Herein, the virtual operation time for each management unit used by the generation unit 204 to generate the maintenance information is the virtual operation time for each component calculated by the time calculation unit 202. The output unit 203 outputs the maintenance information generated by the generation unit 204.

In this embodiment, the maintenance management system 200 includes a computer system (in this case, the server 4) including one or more memories and one or more processors as major components. That is, each of the functions of the maintenance management system 200 is realized by execution of a program recorded in the one or more memories of the computer system by the one or more processors. The program may be recorded in a memory in advance, may be provided through a telecommunication line, such as the Internet or the like, and may be recorded on a non-transient recording medium, such as a memory card or the like, and thus be provided.

[3] Operation of Maintenance Management System

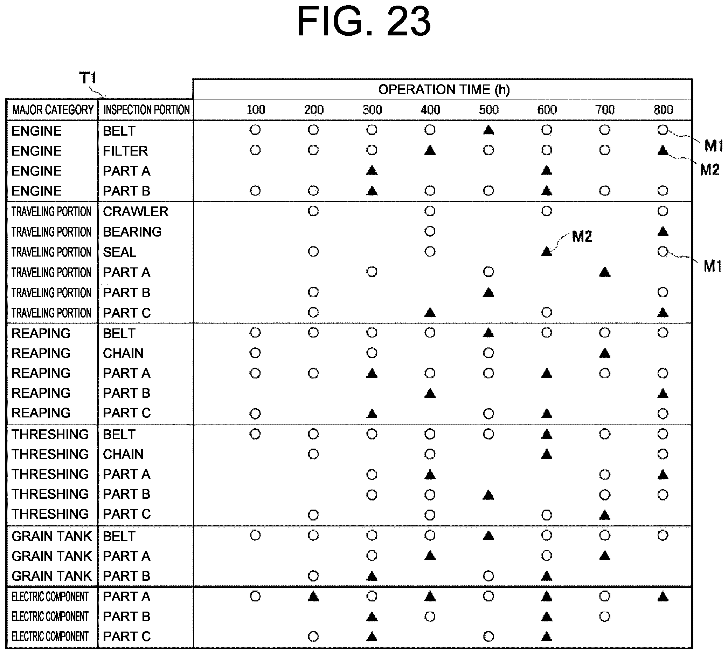

Next, an operation of the maintenance management system 200 of this embodiment will be described with reference to FIG. 23 to FIG. 29. A work machine maintenance management method according to this embodiment is embodied, as an example, in a maintenance management system 200. Therefore, the operation of the maintenance management system 200 described below corresponds to a work machine maintenance management method. A work machine maintenance management program according to this embodiment is a program for causing one or more processors to execute the work machine maintenance management method.

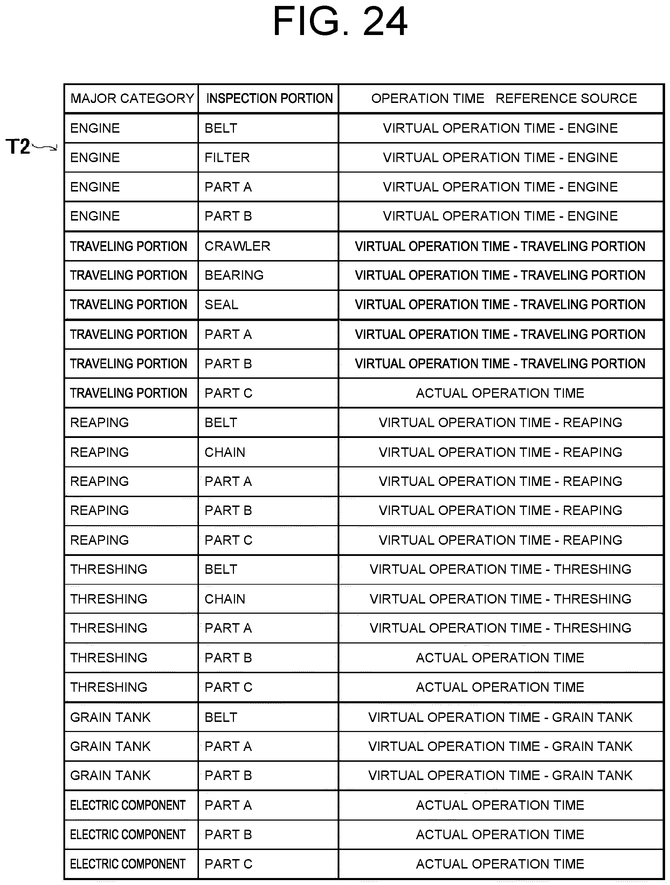

First, as a premise, the maintenance management system 200 memorizes (stores) a maintenance table T1 (see FIG. 23) and a reference source table T2 (see FIG. 24) in the storage unit 64 of the server 4 in advance.

FIG. 23 is a schematic table illustrating an example of contents of the maintenance table T1. The maintenance table T1 is information that represents a recommended maintenance operation time for each management unit. The above-described maintenance table T1 is set in advance for each model of the work machine 2. The "recommended maintenance operation time" as used herein is an operation time during which it is recommended to perform maintenance. Therefore, for a standard work machine 2, when the operation time (actual operation time) reaches the recommended maintenance operation time, it is recommended to perform maintenance. In particular, in this embodiment, the recommended maintenance operation time is differentiated in accordance with a type of maintenance that is recommended to be performed. As an example, the recommended maintenance operation time is set to be differentiated between two types of maintenance, that is, maintenance (inspection, adjustment, cleaning, or the like) that does not involve replacement of parts (components) and maintenance that involves replacement of parts.

In this embodiment, as an example, since the management unit is a component obtained by further subdividing a portion, the recommended maintenance operation time is set for each component in the maintenance table T1. In the maintenance table T1 and the like, a "major category" column indicates the portion and an "inspection portion" column indicates the component. That is, in the maintenance table T1 and the like, the recommended maintenance operation time is set for each management unit (component) with portions divided into groups. In the example of FIG. 23, the maintenance table T1 is in a form of a table, as a so-called star chart, in which a mark is given in a position to which an "operation time" column corresponds for each management unit (component). That is, in the maintenance table T1, a first mark M1 or a second mark M2 is given in a position corresponding to the recommended maintenance operation time in the "operation time" column where the abscissa is a time axis to indicate the recommended maintenance operation time. Herein, the first mark M1 formed of a circle represents the recommended operation time for maintenance (inspection, adjustment, cleaning, or the like) that does not involve replacement of parts and the second mark M2 formed of a triangle represents the recommended operation time for maintenance that involves replacement of parts.

In the example of FIG. 23, six portions, that is, the "engine," the "traveling portion," the "reaping portion," the "threshing portion," the "grain tank portion," and the "electric component," are set as target portions (major category) for the model to which the target work machine 2 belongs. In FIG. 23 and the like, "portions" of the "reaping portion," the "threshing portion," and the "grain tank portion" are omitted. In addition, for the "engine," four components, that is, the "belt," the "filter," the "part A," and the "part B," are set, and for the "traveling portion," six components, that is, the "crawler," the "bearing," the "seal," the "part A," the "part B," and the "part C" are set. For the "reaping portion," five components, that is, the "belt," the "chain," the "part A," the "part B," and the "part C", are set, and for the "threshing portion," five components, that is, the "belt," the "chain," the "part A," the "part B," and the "part C" are set. For the "grain tank portion," three components, that is, the "belt," the "part A," and the "part B," are set, and for the "electric component," three components, that is, the "part A," the "part B," and the "part C," are set.

As described above, in the example of FIG. 23, the recommended maintenance operation time is set individually for each of 26 components (management units) in total divided into six portions. For example, for the component "belt" of the "engine," each of 100 h (hours), 200 h, 300 h, 400 h, 600 h, 700 h, and 800 h is set as the recommended maintenance operation time for maintenance that does not involve replacement of parts. Similarly, for the component "belt" of the "engine," 500 h is set as the recommended maintenance operation time for maintenance involving replacement of parts. For example, for the component called "seal" of the "traveling portion," each of 200 h, 400 h, and 800 h is set as the recommended maintenance operation time for maintenance that does not involve replacement of parts. Similarly, for the component "seal" of the "traveling portion," 600 h is set as the recommended maintenance operation time for maintenance involving replacement of parts. Herein, the "part A," the "part B," and the like are designations used for distinguishing components in each portion, and there is no relevance between different portions. For example, the "part A" of the engine and the "part A" of the traveling portion are not necessarily the same type of component.

FIG. 24 is a schematic table illustrating an example of contents of the reference source table T2. The reference source table T2 is information that represents the reference source in obtaining the maintenance timing for each management unit. The reference source table T2 described above is set in advance for each model of the work machine 2. The "reference source" as used herein is an operation time used in generating the maintenance information representing the maintenance timing and is largely divided into the actual operation time and the virtual operation time. Furthermore, the virtual operation time is divided into the virtual operation time for each management unit. In this embodiment, although the management unit is a component, the virtual operation time is common for a portion to which the component belongs as the management unit and, in other words, the virtual operation time for each component (management unit) is synonymous with the virtual operation time for each portion. Therefore, for example, for the four components, that is, the "belt," the "filter," the "part A," and the "part B" included in the portion "engine," each of reference sources thereof is the virtual operation time of the engine (denoted as "virtual operation time-engine" in FIG. 24). Therefore, the virtual operation time of the engine is used for these management units (components).

On the other hand, each of the reference sources for the "part C" in the "traveling portion," the "parts B" and the "part C" in the "threshing portion," and the "parts A", the "parts B," and the "parts C" in the "electric component"is the actual operation time. Therefore, for these management units (components), the actual operation time is used instead of the virtual operation time in obtaining the maintenance timing. That is, in this example, the virtual operation time of the "electric component" is not used for obtaining the maintenance timing.

The maintenance management system 200 operates to output information related to the maintenance timing as the maintenance information in a state where the maintenance table T1 and the reference source table T2 described above are prepared, that is, stored in the storage unit 64. That is, the maintenance management system 200 first acquires the actual operation time of the target work machine 2 in the acquisition unit 201, and derives the virtual operation time from the actual operation time. In particular, in this embodiment, the maintenance management system 200 calculates the virtual operation time for each portion in the virtual operation time calculation device (time calculation unit 202), based on the actual operation time. As a result, in the maintenance management system 200, the actual operation time, the portion-dependent coefficient, and the portion-dependent virtual time (that is, the virtual operation time for each portion) are obtained for the target work machine 2.

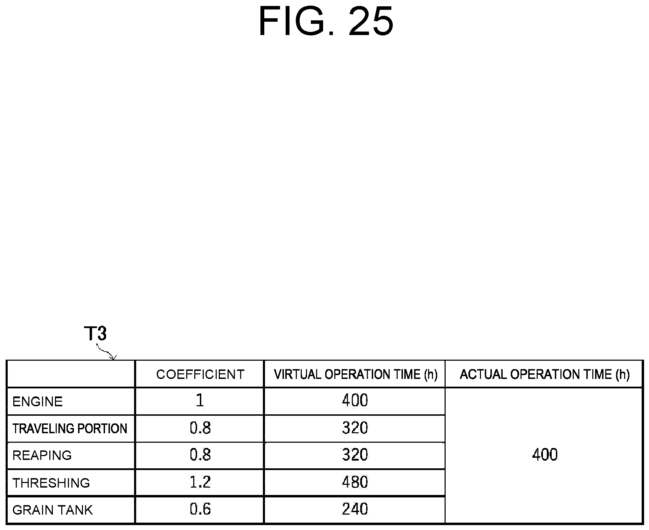

The actual operation time, the portion-dependent coefficient, and the portion-dependent virtual time that are obtained in the above-described manner are summarized in the virtual time table T3 (see FIG. 25). FIG. 25 is a schematic table illustrating an example of contents of the virtual time table T3. The virtual time table T3 is information representing the coefficient (portion-dependent coefficient) and the virtual operation time (portion-dependent virtual time) for each portion (target portion). The virtual time table T3 described above is generated by the virtual operation time calculation device (time calculation unit 202).

More in detail, the time calculation unit 202 calculates a plurality of pieces of operation condition information for each of the plurality of work machines 2 belonging to the model of interest, including the target work machine (work vehicle of interest) 2, based on the operation information during the period of interest of the plurality of work machines 2 belonging to the model of interest. Based on the plurality of pieces of operation condition information calculated for each of the plurality of work machines 2 belonging to the model of interest, the time calculation unit 202 calculates, for each piece of operation condition information of the target work machine 2, a plurality of types of basic coefficients used for calculating the virtual operation time of the target work machine 2 by comparing the operation condition information to the operation condition information of the plurality of work machines 2 belonging to the model of interest as a whole. Herein, the time calculation unit 202 divides the distribution area of the normal distribution into a plurality of classes for each piece of operation condition information of the target work machine 2, assuming that the distribution of the operation condition information across the plurality of work machines 2 belonging to the model of interest follows a normal distribution, determines a class to which the operation condition information of the target work machine 2 belongs, and calculates a basic coefficient, based on the determined class. Then, the time calculation unit 202 calculates a portion-dependent coefficient for each target portion in the target work machine 2, based on the plurality of types of basic coefficients and the portion-dependent coefficient calculation expression set in advance for each target portion. The time calculation unit 202 calculates the virtual operation time for each target portion by multiplying the actual operation time by the portion-dependent coefficient for each target portion.

In short, the time calculation unit 202 calculates the virtual operation time for each management unit of the target work machine 2, based on the comparison results of comparison between reference information and the target information related to an operation condition of the target work machine 2 and the actual operation time of the target work machine 2. Herein, the reference information is information related to the operation conditions of a plurality of work machines 2 having an attribute common to the target work machine 2. That is, the time calculation unit 202 uses the operation condition information of the plurality of work machines 2 belonging to the model of interest as a whole as the reference information and compares the reference information with the operation condition information of the target work machine 2 (target information). Then, the time calculation unit 202 calculates the virtual operation time for each portion of the target work machine 2 using the comparison results of comparison between the reference information and the target information and the actual operation time of the target work machine 2. Thus, the virtual operation time for each management unit is calculated based on circumstances of how the operation condition of the target work machine 2 was as compared to that of a work machine 2 of the same model, and therefore, accuracy of calculation of the virtual operation time for each management unit is improved.

Moreover, in this embodiment, the comparison results of comparison between the reference information and the target information includes a relationship of the operation condition of the target work machine 2 as the target information with respect to a distribution of the operation conditions of the plurality of work machines 2 as the reference information. In short, since the virtual operation time for each management unit is calculated based on positioning of the target work machine 2 in the normal distribution of the same model, a relative evaluation of the operation condition of the target work machine 2 with respect to an average work machine 2 of the same model is accurate. As a result, the accuracy of calculation of the virtual operation time for each management unit is further improved.

In the example of FIG. 25, the coefficient (portion-dependent coefficient) and the virtual operation time (portion-dependent virtual time) for each of the five portions of the "engine," the "traveling portion," the "reaping portion," the "threshing portion," and the "grain tank portion" are represented as a virtual time table T3. In this embodiment, since the virtual operation time of the "electric component" is not used for obtaining the maintenance timing, at least the virtual operation time (portion-dependent virtual time) for the above five portions excluding the "electric component" is calculated in the time calculation unit 202. For example, in a case where the actual operation time is 400 h, when the coefficient for the engine is "1," the virtual operation time therefor is 400 h and, when the coefficient for each of the traveling portion and the reaping portion is "0.8," the virtual operation time therefor is 320 h. On the other hand, when the coefficient for the threshing portion is "1.2," the virtual operation time therefor is 480 h and, when the coefficient for the grain tank portion is "0.6," the virtual operation time is 240 h.

Once the virtual operation time is derived, the maintenance management system 200 next uses the virtual operation time for each management unit in the generation unit 204 to generate maintenance information related to the maintenance timing for at least one management unit among the plurality of management units. In this embodiment, the generation unit 204 generates the maintenance information by comparing information pertaining to the virtual operation time for each management unit to the maintenance table T1 (see FIG. 23). For example, the generation unit 204 generates an output screen D1 including the maintenance information, as illustrated in FIG. 26.

In the example of FIG. 26, the output screen D1 is a screen in which a graph G1 representing the virtual operation time for each management unit is superimposed on the recommended maintenance operation time (first mark M1 and second mark M2) in the "operation time" column in the maintenance table T1. For example, for each component of the "engine," the graph G1 representing "400 h" that is the virtual operation time of the engine is superimposed in the "operation time" column. Similarly, for each component of the "reaping portion," the graph G1 representing "320 h" that is the virtual operation time of the reaping portion is superimposed in the "operation time" column.

However, the operation time used at this time is specified in the reference source table T2 (FIG. 24) as the reference source for each management unit (component), and the virtual operation time is not necessarily applied to all management units. For example, for management units, such as the "part B" and the "part C" in the "threshing portion," or the like, whose reference source is the actual operation time, the actual operation time is used, instead of the virtual operation time. Therefore, also in the output screen D1, for management units, such as the "part B" and the "part C" of the "threshing portion," or the like, whose reference source is the actual operation time, a graph G2 representing the actual operation time is superimposed on the maintenance table T1. Herein, each of the graph G1 and the graph G2 is a bar graph of the same scale as that of a time axis (abscissa) of the "operation time" column of maintenance table T1 and has a numerical value (numeral) representing a value (time) in a base end portion (left end). Furthermore, in the above output screen D1, the graph G1 representing the virtual operation time and the graph G2 representing the actual operation time are displayed without distinction.

The output screen D1 indicates the maintenance timing for each management unit by the graph G1 or the graph G2. That is, the maintenance timing for each management unit is represented by the graph G1 or the graph G2 superimposed on the first mark M1 and the second mark M2 representing the recommended maintenance operation time in the maintenance table T1. For example, for the "belt" of the "engine," a tip portion (right end) of the graph G1 representing the virtual operation time (400 h) is superimposed on the first mark M1 set at 400 h, so that the graph G1 represents arrival of the maintenance timing for maintenance that does not involve replacement of parts. For the "part A" of the "reaping portion," a tip portion of the graph G1 representing the virtual operation time (320 h) is superimposed on the second mark M2 set at 300 h, so that the graph G1 represents arrival of the maintenance timing for maintenance involving replacement of parts. Moreover, for the "part C" of the "traveling portion," a tip portion of the graph G2 representing the actual operation time (400 h) is superimposed on the second mark M2 set at 400 h, so that the graph G2 represents arrival of the maintenance timing for maintenance involving replacement of parts. That is, the output screen D1 includes maintenance information related to the maintenance timing.

When the output screen D1 is generated in the generation unit 204, the output unit 203 displays the output screen D1 on a display device, such as, for example, the display 42 of the service terminal 3, the operation display unit 62 of the server 4, the display unit 25 of the work machine 2, or the like. The output screen D1 displayed on the display 42 of the service terminal 3 makes it easy for the terminal operator to compare the recommended maintenance operation time with the virtual operation time obtained by adding the use state to the actual operation time, for each management unit (component). As a result, the terminal operator can appropriately recognize the maintenance timing for each component. However, in FIG. 26 and the like, the leading lines and reference signs illustrated in the output screen are given for the purpose of description and are not to be displayed on the display device.

In short, in this embodiment, the maintenance information is information representing the maintenance timing using the virtual operation time, instead of the actual operation time. For example, in the above-described output screen D1, for a management unit, such as each component of the "reaping portion" or the like, whose reference source is the virtual operation time, the maintenance timing is represented by the graph G1 representing the virtual operation time, instead of the actual operation time. Therefore, with such maintenance information (output screen D1 including the maintenance information), it is possible to appropriately recognize the maintenance timing for each component in the virtual operation time obtained by adding the use state to the actual operation time.

In this embodiment, the maintenance information includes information representing a relative relationship between the recommended maintenance operation time and the virtual operation time for at least one management unit. The output unit 203 outputs at least the above-described relative relationship on the display device in a displayable mode. For example, in the above-described output screen D1, the graph G1 representing the virtual operation time is superimposed on the recommended maintenance operation time in the maintenance table T1, and thus, the relative relationship between the recommended maintenance operation time and the virtual operation time is represented. Therefore, with such maintenance information (output screen D1 including the maintenance information), it is possible to appropriately recognize the maintenance timing for each component.

Furthermore, in this embodiment, the output unit 203 displays the recommended maintenance operation time and the virtual operation time in a list. For example, in the above-described output screen D1, the graph G1 representing the virtual operation time is superimposed on the recommended maintenance operation time in the maintenance table T1, so that the recommended maintenance operation time and the virtual operation time are displayed in a list. Accordingly, with such maintenance information (output screen D1 including the maintenance information), it is easier to compare the recommended maintenance operation time to the virtual operation time and it is also easier to more appropriately recognize the maintenance timing for each component.

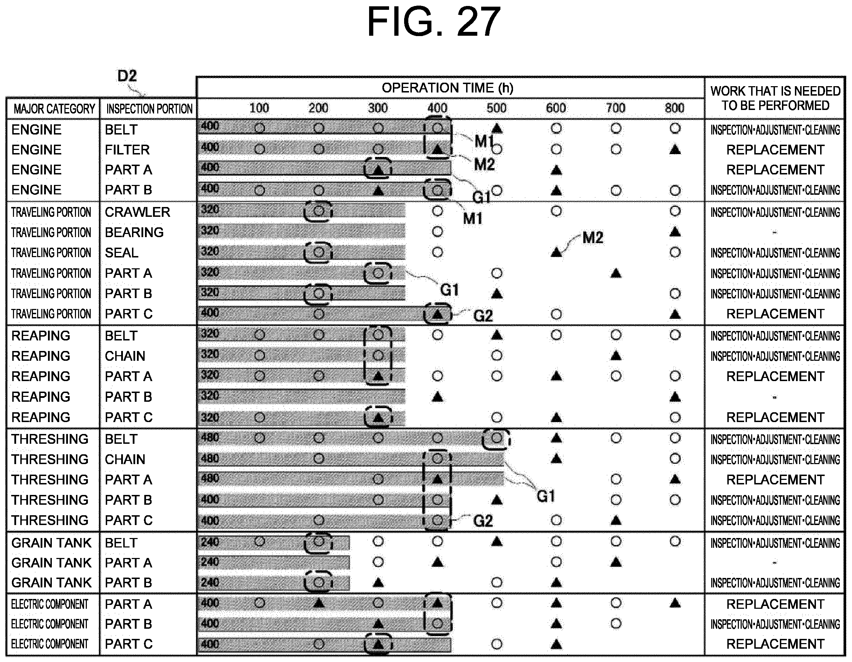

In this embodiment, the output unit 203 can also display an output screen D2 as illustrated in FIG. 27 on the display device, instead of the output screen D1 of FIG. 26. In the example of FIG. 27, the output screen D2 includes a "work that is needed to be performed" column in addition to the output screen D1 of FIG. 26. In the "work that is needed to be performed" column, contents of maintenance arrival of the maintenance timing of which is detected is displayed for each management unit. The detection of whether the maintenance timing has arrived is realized by comparing the graph G1 representing the virtual operation time or the graph G2 representing the actual operation time to the recommended maintenance operation time in the maintenance table T1. Herein, it is determined that the maintenance timing has arrived for maintenance with the recommended maintenance operation time at a closest position in past from a time point of the virtual operation time or the actual operation time, that is, a latest maintenance. In a case where there is no applicable maintenance, the "work that is needed to be performed" column is marked with "-."

For example, for the "belt" of the "engine," a timing for maintenance that does not involve the replacement of parts has arrived, and the contents of the corresponding maintenance (inspection, maintenance, cleaning) are displayed in the "work that is needed to be performed" column. Moreover, for the "part C" of the "traveling portion," a timing for maintenance involving replacement of parts has arrived, and the content of the corresponding maintenance (replacement) is displayed in the "work that is needed to be performed" column. In FIG. 27, a mark pertaining to the maintenance arrival of the maintenance timing of which has been detected (first mark M1 or second mark M2) is enclosed by a long dashed short dashed line, but in the actual output screen D2, the mark may be highlighted, and may not be highlighted as illustrated by the long dashed short dashed line. With the output screen D2 illustrated in FIG. 27, it is easier to recognize the maintenance timing more appropriately for each component.

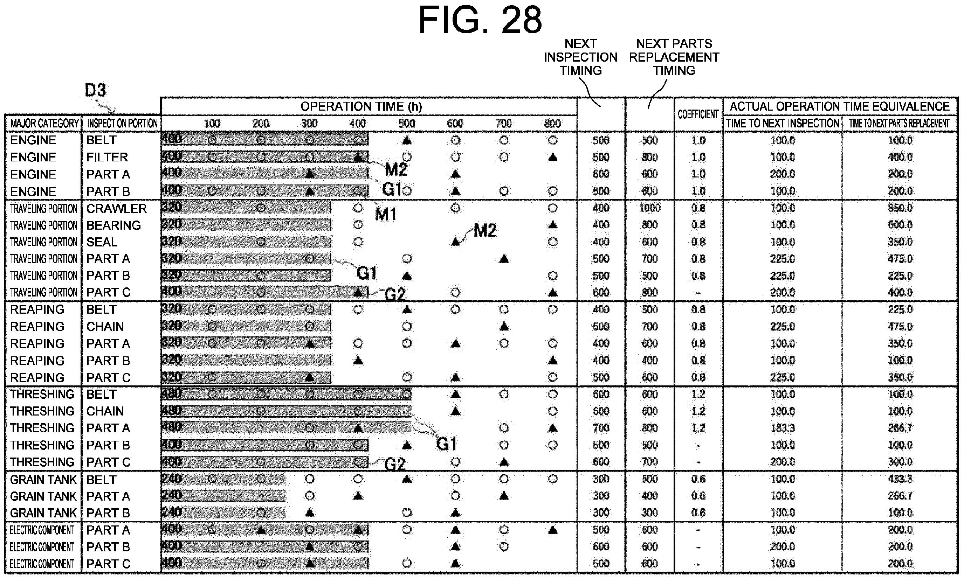

In this embodiment, the output unit 203 can also display an output screen D3 illustrated in FIG. 28, instead of the output screen D1 of FIG. 26, on the display device. In the example of FIG. 28, the output screen D3 has, in addition to the output screen D1 of FIG. 26, a "next inspection timing" column, a "next parts replacement timing" column, a "coefficient" column, and an "actual operation time equivalent" column. In the "next inspection timing" column, a recommended timing of next maintenance for maintenance that does not involve replacement of parts is displayed for each management unit. In the "next parts replacement timing" column, a recommended timing of next maintenance involving replacement of parts is displayed for each management unit. In the "coefficient" column, a coefficient (portion-dependent coefficient) related to the reference source used in obtaining the maintenance timing is displayed for each management unit. In a case where the reference source is the actual operation time, "-" is given in the "coefficient" column. In the "actual operation time equivalent" column, a value obtained by converting a time to a next recommended maintenance timing to the actual operation time is displayed. The "actual operation time equivalent" column is divided into a "time to next inspection" column corresponding to the "next inspection timing" and a "time to next parts replacement" column corresponding to the "next parts replacement timing."

The "next maintenance" as used herein is obtained from the relative relationship between the reference time point and the recommended maintenance operation time in the maintenance table T1, when the virtual operation time or the actual operation time that is the reference source is used as the reference time point. For example, maintenance whose recommended maintenance operation time is on or after a reference time point and arrives first (that is, is closest to the reference time point) is next maintenance. Herein, as an example, a recommended timing of the next maintenance indicated in each of the "next inspection timing" column and the "next parts replacement timing" column is represented by the recommended maintenance operation time in the maintenance table T1. For example, for the "part C" of the "traveling portion," the "next inspection timing" is "500 h" corresponding to the first mark M1 and the "next parts replacement timing" is "600 h" corresponding to the second mark M2.

In the "coefficient" column, a coefficient (portion-dependent coefficient) pertaining to the reference source is displayed for each management unit by referring to the reference source table T2 and the virtual time table T3. However, the coefficient displayed in the "coefficient" column may be calculated by dividing the virtual operation time by the actual operation time for each management unit.

The time to the next recommended maintenance timing displayed in the "actual operation time equivalent" column is represented by the difference between the recommended maintenance operation time for "next maintenance" and the reference time point. However, if there is only a mere difference between the recommended maintenance operation time and the reference time point, the virtual operation time and the actual operation time will be mixed, so that a value obtained by converting the difference to the actual operation time using the coefficient in the "coefficient" column is displayed in the "actual operation time equivalent" column. For example, for the "part C" of the "traveling portion," a value (225 h) obtained by dividing a difference (180 h) between the next inspection timing (500 h) and the virtual operation time (320 h) that is the reference time point by the coefficient (0.8) is the "time to next inspection."

That is, in this embodiment, the maintenance information includes information representing the recommended timing of the next maintenance for at least one management unit. Information indicating the recommended timing of the next maintenance corresponds to indication in the "next inspection timing" column, the "next parts replacement timing" column, and the "actual operation time equivalent" column described above. Notation of the recommended timing of the next maintenance is not limited to the time (remaining time) to the recommended timing of maintenance in the "actual operation time equivalent" column but may be a date (X month and Y date) on which the recommended timing of the next maintenance is expected to arrive, or the like. As described above, according to the output screen D3 illustrated in FIG. 28, it is possible to indicate for each component how many hours in actual operation time will elapse before maintenance is required and a time to next maintenance can be appropriately recognized.

In this embodiment, the recommended timing is represented by the actual operation time. That is, the recommended timing of the next maintenance is expressed in terms of actual operation time, as indicated in the "actual operation time equivalent" column described above. Thus, for each component, the time to the next maintenance can be more appropriately recognized.

Which one of the output screens D1, D2, or D3 is to be displayed may be arbitrarily selected. For example, the output screens D1, D2, and D3 may be switched from one to another by an operation of the terminal operator or the like who views the output screens D1, D2, and D3. As a matter of course, the terminal operator or the like can recognize a work that is needed to be performed even from the output screen D1 illustrated in FIG. 26. Similarly, even from the output screen D1 illustrated in FIG. 26, the terminal operator or the like can recognize the time to the next maintenance.

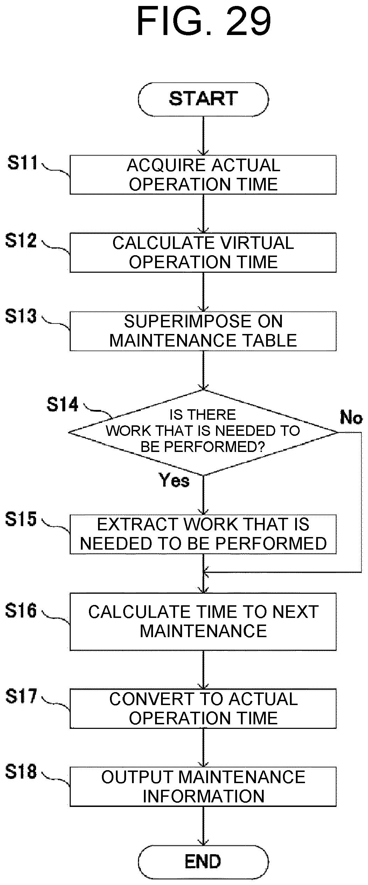

With reference to FIG. 29, an example of a maintenance management method for the work machine 2 embodied by the maintenance management system 200 (server 4) will be described below. For example, the maintenance management method is started in response to a predetermined user (including the terminal operator) operation on the service terminal 3, the work machine 2, or the server 4. Alternatively, the maintenance management method may be started on a regular basis.

In Step S11, the maintenance management system 200 (server 4) acquires the actual operation time of the target work machine 2 in the acquisition unit 201. Specifically, the acquisition unit 201 receives vehicle-side information including operation information from the target work machine 2 and acquires the actual operation time, based on the hour meter value included in the operation information.

In Step S12, the maintenance management system 200 (server 4) calculates the virtual operation time of the target work machine 2, based on the actual operation time, in the time calculation unit 202. At this time, the time calculation unit 202 calculates the virtual operation time for each portion.

In Step S13, the maintenance management system 200 (server 4) superimposes the calculated virtual operation time of the target work machine 2 on the maintenance table T1 in the output unit 203 (generation unit 204). At this time, the generation unit 204 generates the output screen D1 by superimposing the graph G1 representing the virtual operation time for each management unit on the maintenance table T1.

In Step S14, the maintenance management system 200 (server 4) determines whether there is a required work in the output unit 203 (generation unit 204). The "required work" as used herein means maintenance arrival of a maintenance timing of which is detected and corresponds to information displayed in the "work that is needed to be performed" column of the output screen D2 in FIG. 27. That is, the generation unit 204 determines whether there is a required work (maintenance arrival of a maintenance timing of which is detected) by comparing the graph G1 representing the virtual operation time or the graph G2 representing the actual operation time to the recommended maintenance operation time in the maintenance table T1.

In Step S14, if it is determined that there is a required work (S14: Yes), the process proceeds to Step S15. On the other hand, if it is determined that there is no required work (S14: No), the process proceeds to Step S16.

In Step S15, the maintenance management system 200 (server 4) extracts the required work for each management unit in the output unit 203 (generation unit 204). That is, for maintenance that is determined to be a required work in Step S14, the generation unit 204 extracts contents and management units of the maintenance.

In Step S16, the maintenance management system 200 (server 4) calculates the time to the next maintenance in the output unit 203 (generation unit 204). The "time to the next maintenance" as used herein means the time (remaining time) to the recommended timing of the next maintenance and corresponds to information displayed in the "actual operation time equivalent" column of the output screen D3 in FIG. 28. That is, the generation unit 204 calculates the time to the next maintenance, based on the difference between the recommended maintenance operation time for the "next maintenance" and the reference time point.

In Step S17, the maintenance management system 200 (server 4) converts the time to the next maintenance calculated in Step S16 to the actual operation time in the output unit 203 (generation unit 204). Specifically, the generation unit 204 converts the difference between the recommended timing of the next maintenance and the virtual operation time that is the reference time point for each management portion to the actual operation time by dividing the difference by the coefficient pertaining to the reference source (portion-specific coefficient).

In Step S18, the maintenance management system 200 (server 4) outputs maintenance information related to the maintenance timing in the output unit 203. For example, the output unit 203 outputs the maintenance information by displaying one of the output screens D1, D2, and D3 on the display device, such as the display 42 of the service terminal 3, the operation display unit 62 of the server 4, the display unit 25 of the work machine 2, or the like.

The above-described procedure for the maintenance management method is merely one example and an order of processes illustrated in a flowchart in FIG. 29 may be changed as appropriate.

[4] Variations

Variations of the first embodiment will be described below. The variations described below can be applied in combination, as appropriate.

The maintenance management system 200 in the present disclosure includes a computer system. The computer system includes, as main components, a processor and memory as hardware. By executing a program recorded in the memory of the computer system by the processor, functions as the maintenance management system 200 in the present disclosure are realized. In other words, the maintenance management program for the work machine 2 is a program for causing one or more processors to execute the maintenance management method for the work machine 2 described above. The program may be recorded in the memory of the computer system in advance, may be provided through an electrical communication line, or may be recorded on a non-transitory recording medium, such as a memory card, an optical disk, a hard disk drive, or the like, that is readable by the computer system and thus provided.

It is not a required configuration for the maintenance management system 200 that at least some of the functions of the maintenance management system 200 are integrated within a single housing, and the components of the maintenance management system 200 may be provided so as to be distributed to a plurality of housings. For example, the output unit 203 of the maintenance management system 200 may be provided in a separate housing from that of the acquisition unit 201. Furthermore, at least some of the functions of the maintenance management system 200 may be realized by a cloud (cloud computing) or the like. Conversely, the plurality of functions of the maintenance management system 200 may be integrated within a single housing.

The output unit 203 is not limited to a mode in which information, such as the "required work," the "time to the next maintenance," or the like, is displayed as the output screens D2, D3, but may be configured to inform the "required work," the "time to the next maintenance," or the like in some other mode. As an example, the output unit 203 may be configured to obtain the "required work" as internal processing and to directly inform, in a case where there is a required work, the user by lighting a lamp or outputting a sound (including an audio) in the target work machine 2. Similarly, the output unit 203 may be configured to obtain the "time to the next maintenance" as internal processing and directly inform the user of the "time to the next maintenance" by lighting a lamp or outputting a sound (including an audio) in the target work machine 2.

(Second Embodiment)

A maintenance management system 200 of this embodiment differs from the maintenance management system 200 of the first embodiment in that an output unit 203 outputs maintenance information using a maintenance history of a target work machine 2 in addition to a virtual operation time. In the following, each component that is the same as that of the first embodiment is denoted by a common reference sign with that of the corresponding component of the first embodiment and description thereof will be omitted as appropriate.

A "maintenance history" as used herein is information as a record (log) of actual maintenance performed on the target work machine 2 and, as an example, is registered (recorded) at a service base (service shop) or the like where the maintenance is performed. The maintenance history may be manually registered by a person and may be automatically registered as maintenance is performed. The maintenance history includes information, such as contents of maintenance that has been performed, a performance timing of maintenance, or the like, for each work machine and each management unit. The performance timing is expressed in terms of the actual operation time, as an example.

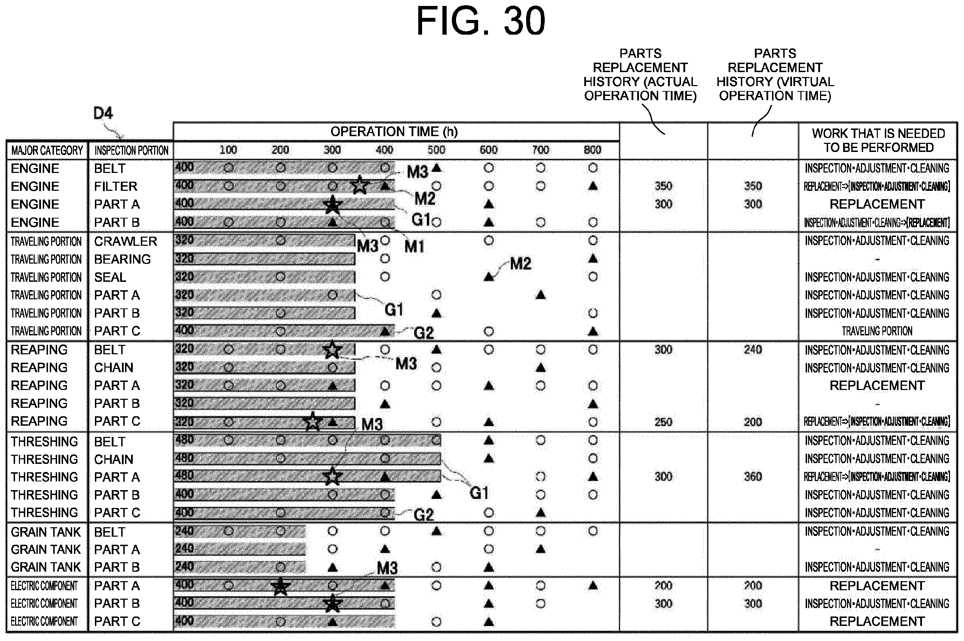

Specifically, in this embodiment, the output unit 203 causes the display device to display the output screen D4 illustrated in FIG. 30, instead of the output screen D2 of FIG. 27. In an example of FIG. 30, the output screen D4 includes, in addition to the output screen D2 of FIG. 27, a third mark M3, a "parts replacement history (actual operation time)" column and a "parts replacement history (virtual operation time)" column.

The third mark M3 is a mark representing the maintenance history. In the output screen D4, the third mark M3 is given in a position corresponding to the actual operation time when maintenance was performed in the "operation time" column of the maintenance table T1 in which the abscissa is the time axis to represent the maintenance history. In this embodiment, as an example, the third mark M3 is formed of a star and represents only a history of maintenance involving replacement of parts. For example, for a "filter" of the "engine," maintenance involving the replacement of parts was carried out at 350 h (actual operation time), and therefore, the third mark M3 is given in a position of 350 h. For a "belt" of the "reaping portion," maintenance involving replacement of parts was performed at 300 h (actual operation time), and therefore, the third mark M3 is given in a position of 300 h. As described above, the maintenance history is included in the maintenance information (output screen D4), and thus, even when arrival of a maintenance timing is detected, needs for maintenance can be easily recognized based on whether maintenance has been already performed.

In the "parts replacement history (actual operation time)" column, a performance timing of maintenance involving replacement of parts that has been performed is displayed in terms of the actual operation time for each management unit. In the "parts replacement history (virtual operation time)" column, a performance timing of maintenance involving replacement of parts that has been performed is displayed in terms of the virtual operation time for each management unit. That is, a time displayed in the "parts replacement history (actual operation time)" column is equal to a time with the third mark M3 given. On the other hand, a time displayed in the "parts replacement history (virtual operation time)" column is a value obtained by converting the time displayed in the "parts replacement history (actual operation time)" column to the virtual operation time. That is, a time obtained by multiplying the time displayed in the "parts replacement history (actual operation time)" column by a coefficient (portion-specific coefficient) is displayed in the "parts replacement history (virtual operation time)" column. For example, for the "filter" of the "engine," a value (350 h) obtained by multiplying the performance timing of maintenance (350 h) by a coefficient (1.0) is the "parts replacement history (virtual operation time). For the "belt" of the "reaping portion," a value (240 h) obtained by multiplying the performance timing of maintenance (300 h) by a coefficient (0.8) is the "parts replacement history (virtual operation time)".

Display contents of the "work that is needed to be performed" column in the output screen D4 are determined based on the maintenance history. That is, even for maintenance arrival of a maintenance timing of which is detected, if the maintenance has already been performed, the maintenance is removed from the "work that is needed to be performed" column because it is not necessary to perform the maintenance again. Specifically, for each management unit, when the virtual operation time or the actual operation time that is the reference source is used as the reference time point, a difference between the reference time point and the performance timing of maintenance in the maintenance history is calculated and whether the maintenance is to be removed from the "work that is needed to be performed" column is determined based on the difference. More in detail, the maintenance management system 200 determines whether the management is to be removed from the "work that is needed to be performed" column by comparing the difference to a maintenance interval. The maintenance interval as used herein is a time that is set as an interval for a relevant maintenance in advance in the maintenance table T1. If the difference is less than the interval, the maintenance is removed from the "work that is needed to be performed" column.

For example, for the "filter" of the "engine," the difference (50 h) between the reference time point (400 h) that is the virtual operation time and 350 h that is the "parts replacement history (virtual operation time)" is less than 400 h that is the interval. Therefore, for the "filter" of the "engine," replacement of parts is removed from the "work that is needed to be performed" column and indication in the "work that is needed to be performed" column is changed to "inspection, adjustment, and cleaning." On the other hand, for the "part B" of the "engine," the difference (400 h) between the reference time point (400 h) that is the virtual operation time and 0 h that is the "parts replacement history (virtual operation time)" is equal to or more than 300 h that is the interval. Therefore, for the "part B" of the "engine," replacement of parts is added to the "work that is needed to be performed" column and indication in the "work that is needed to be performed" column is changed to "replacement." For the "part C" of the "reaping portion," the difference (120 h) between the reference time point (320 h) that is the virtual operation time and 200 h that is the "parts replacement history (virtual operation time)" is less than 300 h that is the interval. Therefore, for the "part C" of the "reaping portion," replacement of parts is removed from the "work that is needed to be performed" column and indication in the "work that is needed to be performed" column is changed to "inspection, adjustment, and cleaning."

As described above, in this embodiment, the output unit 203 outputs the maintenance information, based on a result of comparison between the maintenance history and the maintenance timing on the same time axis. In short, as described above, by comparing the maintenance history (parts replacement history) to the maintenance timing (reference time point) in terms of the virtual operation time, the comparison is performed on the same time axis, so that more accurate maintenance information can be obtained. For a management unit, such as the "part C" of the "reaping portion," whose reference source is the "actual operation time," the maintenance history is compared to the maintenance timing on the same time axis by performing the comparison on the actual operation time.

The various configurations described in the second embodiment can be employed in combination with the various configurations (including variations) described in the first embodiment, as appropriate.

[Addendum of The Invention]

One embodiment of the present invention provides a virtual operation time calculation device that calculates a virtual operation time for a predetermined period for each of predetermined one or more target portions in a predetermined target work vehicle among a plurality of predetermined work vehicles belonging to a predetermined model, the virtual operation time calculation device including an operation condition information calculation unit that calculates a plurality of pieces of predetermined operation condition information for each of the plurality of work vehicles, based on operation information of the plurality of work vehicles during the predetermined period, a basic coefficient calculation unit that calculates a plurality of basic coefficients used for calculating a virtual operation time of the target work vehicle by comparing the operation condition information to the operation condition information of the plurality of work vehicles as a whole for each piece of operation condition information of the target work vehicle, based on the plurality of pieces of operation condition information calculated for each of the plurality of work vehicles, a portion-dependent coefficient calculation unit that calculates a portion-dependent coefficient for each of the one or more target portions in the target work vehicle, based on the plurality of basic coefficients and a portion-dependent coefficient calculation expression set for each of the one or more target portions in advance, and a portion-dependent virtual operation time calculation unit that calculates a virtual operation time for each of the one or more target portions by multiplying an actual operation time of the target work vehicle during the predetermined period by the portion-specific coefficient for each of the one or more target portions.

With this configuration, it is possible to calculate the virtual operation time obtained by adding a relative use state of the target portion in the plurality of work vehicles of the same model for each target portion of the target work vehicle.

In one embodiment of the present invention, the basic coefficient calculation unit is configured to, for each piece of operation condition information of the target work vehicle, assume that a distribution of the operation condition information across the plurality of the work vehicles as a whole follows a normal distribution and thus divide a distribution area of the normal distribution into a plurality of classes, determine a class to which the operation condition information of the target work vehicle belongs, and calculate a basic coefficient, based on the determined class.

In one embodiment of the invention, the basic coefficient calculation unit is configured to calculate an average and a standard deviation for the plurality of work vehicles as a whole for each piece of operation condition information of the target work vehicle and determine a class to which the operation condition information of the target work vehicle belongs using the calculated average and standard deviation and a standardization expression.

In one embodiment of the invention, the virtual operation time calculation device further includes an output screen generation unit that generates an output screen used for displaying the virtual operation time for each of the one or more target portions in the target work vehicle calculated by the portion-dependent virtual operation time calculation unit.

In one embodiment of the invention, the operation information includes on and off information of predetermined one or more members to be turned on and off and/or analog information that is a predetermined one or more measured values or detected values.

**Claims**

1. A work machine maintenance management system comprising:

   an acquisition unit that acquires an actual operation time of a target work machine including a plurality of management units; and
   an output unit that outputs maintenance information related to a maintenance timing for at least one management unit among the plurality of management units using a virtual operation time for each of the management units derived from the actual operation time.

2. The work machine maintenance management system according to claim 1, wherein

   the target work machine includes a plurality of portions each including one or more components, and
   the management units and the components are associated with one another in a one-to-one correspondence.

3. The work machine maintenance management system according to claim 1 or 2, further comprising:
   a time calculation unit that calculates the virtual operation time of each of the management units of the target work machine.

4. The work machine maintenance management system according to claim 3, wherein
   the time calculation unit calculates, based on reference information related to work conditions of a plurality of work machines having an attribute common to the target work machine, a comparison result of comparison to target information related to a work condition of the target work machine, and the actual operation time of the target work machine, the virtual operation time for each of the management units of the target work machine.

5. The work machine maintenance management system according to claim 4, wherein
   a comparison result of comparison between the reference information and the target information includes a relationship of the operation condition of the target work machine as the target information with respect to a distribution of the operation conditions of the plurality of work machines as the reference information.

6. The work machine maintenance management system according to claim 3, wherein

   the time calculation unit calculates the virtual operation time for a predetermined period for each of the predetermined one or more target portions as the management units in the target work machine among the plurality of predetermined work machines belonging to a predetermined model, and
   the time calculation unit includes
   an operation condition information calculation unit that calculates, based on operation information of the plurality of work machines during the predetermined period, a plurality of pieces of predetermined operation condition information for each of the plurality of work machines,
   a basic coefficient calculation unit that calculates, based on the plurality of pieces of operation condition information calculated for each of the plurality of work machines, a plurality of basic coefficients used for calculating the virtual operation time of the target work machine for each of the operation condition information of the target work machine by comparing the operation condition information to the operation condition information of the plurality of work machines as a whole,
   a portion-dependent coefficient calculation unit that calculates, based on the plurality of basic coefficients and a portion-dependent coefficient calculation expression set for each of the one or more target portions in advance, a portion-dependent coefficient for each of the one or more target portions of the target work machine, and
   a portion-dependent virtual operation time calculation unit that calculates a virtual operation time for each of the one or more target portions by multiplying the actual operation time of the target work machine during the predetermined period by the portion-dependent coefficient for each of the one or more target portions.

7. The work machine maintenance management system according to claim 6, wherein
the basic coefficient calculation unit is configured to, for each piece of operation condition information of the target work machine, assume that a distribution of the operation condition information across the plurality of the work machines as a whole follows a normal distribution and thus divide a distribution area of the normal distribution into a plurality of classes, determine a class to which the operation condition information of the target work machine belongs, and calculate a basic coefficient, based on the determined class.

8. The work machine maintenance management system according to claim 7, wherein
the basic coefficient calculation unit is configured to calculate an average and a standard deviation for the plurality of work machines as a whole for each piece of operation condition information of the target work machine and determine a class to which the operation condition information of the target work machine belongs using the calculated average and standard deviation and a standardization expression.

9. The work machine maintenance management system according to any one of claims 6 to 8, further comprising:
an output screen generation unit that generates an output screen used for displaying the virtual operation time for each of the one or more target portions of the target work machine calculated by the portion-dependent virtual operation time calculation unit.

10. The work machine maintenance management system according to any one of claims 6 to 9, wherein
the operation information includes on and off information of predetermined one or more members to be turned on and off and/or analog information that is a predetermined one or more measured values or detected values.

11. The work machine maintenance management system according to any one of claims 1 to 10, wherein
the maintenance information is information representing the maintenance timing using the virtual operation time, instead of the actual operation time.

12. The work machine maintenance management system according to any one of claims 1 to 11, wherein

the maintenance information includes information representing a relative relationship between a recommended maintenance operation time and the virtual operation time for at least one of the management units, and
the output unit outputs at least the relative relationship in a mode displayable on a display device.

13. The work machine maintenance management system according to claim 12, wherein
the output unit displays the recommended maintenance operation time and the virtual operation time in a list.

14. The work machine maintenance management system according to any one of claims 1 to 13, wherein
the maintenance information includes information representing a recommended timing of next maintenance for at least one of the management units.

15. The work machine maintenance management system according to claim 14, wherein
the recommended timing is represented by the actual operation time.

16. The work machine maintenance management system according to any one of claims 1 to 15, wherein
the output unit outputs the maintenance information using a maintenance history of the target work machine in addition to the virtual operation time.

17. The work machine maintenance management system according to claim 16, wherein
the output unit outputs the maintenance information, based on a comparison result of comparison between the maintenance history and the maintenance timing on a same time axis.

18. A work machine maintenance management method comprising:

acquiring an actual operation time of a target work machine including a plurality of management units; and
outputting maintenance information related to a maintenance timing for at least one management unit among the plurality of management units using a virtual operation time for each of the management units derived from the actual operation time.

19. A work machine maintenance management program, the program causing one or more processors to execute processes of:

achieving an actual operation time of a target work machine including a plurality of management units; and
outputting maintenance information related to a maintenance timing for at least one management unit among the plurality of management units using a virtual operation time for each of the management units derived from the actual

operation time.

# FIG. 1

SERVICE TERMINAL ~ 3

SERVER ~ 4

5

2A₁, 2A, 2

2A₂, 2A, 2

2AL, 2A, 2

2B₁, 2B, 2

2B₂, 2B, 2

2BM, 2B, 2

2C₁, 2C, 2

2C₂, 2C, 2

2CN, 2C, 2

1

EP 4 036 818 A1

# FIG. 2

EP 4 036 818 A1

# FIG. 3

72

| MODEL | TARGET PORTION NAME | | | |
|---|---|---|---|---|
| | PORTION 1 | PORTION 2 | PORTION 3 | PORTION 4 |
| YH1111 | a1 PORTION | a2 PORTION | a3 PORTION | a4 PORTION |
| YT2222 | b1 PORTION | b2 PORTION | b3 PORTION | |
| YR3333 | c1 PORTION | c2 PORTION | | |

# FIG. 4

73

| MODEL | BASIC COEFFICIENT AND OPERATION CONDITION INFORMATION | | | |
|---|---|---|---|---|
| | BASIC COEFFICIENT A | BASIC COEFFICIENT B | BASIC COEFFICIENT C | BASIC COEFFICIENT D |
| YH1111 | TOTAL OF ON AND OFF INFORMATION 1 | TOTAL OF ON AND OFF INFORMATION 2 | AVERAGE OF ANALOG INFORMATION 1 | AVERAGE OF ANALOG INFORMATION 2 |
| YT2222 | TOTAL OF ON AND OFF INFORMATION 1 | TOTAL OF ON AND OFF INFORMATION 2 | STANDARD DEVIATION OF ANALOG INFORMATION 1 | |
| YR3333 | TOTAL OF ON AND OFF INFORMATION 2 | MAXIMUM VALUE OF ANALOG INFORMATION 2 | | |

# FIG. 5

74

| MODEL | CALCULATION EXPRESSION FOR PORTION-DEPENDENT COEFFICIENT | | | |
|---|---|---|---|---|
| | PORTION 1 | PORTION 2 | PORTION 3 | PORTION 4 |
| YH1111 | A×B×C | B×C×D | B×C | C×D |
| YT2222 | A+B | A+C | A+B+C | |
| YR3333 | (A+B)/2 | (A+B+C)/3 | | |

# FIG. 6

# FIG. 7

| CLASS NUMBER i | PROBABILITY RANGE | RANDOM VARIABLE RANGE |
|---|---|---|
| 1 | LESS THAN 5% | $-4.00 \leq z < -1.65$ |
| 2 | 5% OR MORE AND LESS THAN 15% | $-1.65 \leq z < -1.04$ |
| 3 | 15% OR MORE AND LESS THAN 25% | $-1.04 \leq z < -0.68$ |
| 4 | 25% OR MORE AND LESS THAN 35% | $-0.68 \leq z < -0.39$ |
| 5 | 35% OR MORE AND LESS THAN 45% | $-0.39 \leq z < -0.13$ |
| 6 | 45% OR MORE AND LESS THAN 50% | $-0.13 \leq z < 0$ |
| 7 | 50% OR MORE AND LESS THAN 55% | $0 \leq z < 0.13$ |
| 8 | 55% OR MORE AND LESS THAN 65% | $0.13 \leq z < 0.39$ |
| 9 | 65% OR MORE AND LESS THAN 75% | $0.39 \leq z < 0.68$ |
| 10 | 75% OR MORE AND LESS THAN 85% | $0.68 \leq z < 1.04$ |
| 11 | 85% OR MORE AND LESS THAN 95% | $1.04 \leq z < 1.65$ |
| 12 | 95% OR MORE | $1.65 \leq z \leq 4.00$ |

# FIG. 8

75

| | |
|---|---|
| $z_1$ | -1.65 |
| $z_2$ | -1.04 |
| $z_3$ | -0.68 |
| $z_4$ | -0.39 |
| $z_5$ | -0.13 |
| $z_6$ | 0 |
| $z_7$ | 0.13 |
| $z_8$ | 0.39 |
| $z_9$ | 0.68 |
| $z_{10}$ | 1.04 |
| $z_{11}$ | 1.65 |

# FIG. 9

START

S1 CALCULATE ACTUAL OPERATION TIME IN PERIOD OF INTEREST FOR EACH WORK VEHICLE BELONGING TO MODEL OF INTEREST

S2 CALCULATE OPERATION CONDITION INFORMATION FOR EACH WORK VEHICLE BELONGING TO MODEL OF INTEREST

S3 FIRST CALCULATION TARGET REMOVING PROCESSING

S4 SECOND CALCULATION TARGET REMOVING PROCESSING

S5 CALCULATE AVERAGE AND STANDARD DEVIATION IN WORK VEHICLE AS A WHOLE BELONGING TO MODEL OF INTEREST FOR EACH OPERATION CONDITION INFORMATION FOR MODEL OF INTEREST

S6 FOR EACH OPERATION CONDITION INFORMATION OF WORK VEHICLE OF INTEREST, DETERMINE CLASS TO WHICH OPERATION CONDITION INFORMATION BELONGS AND ALLOCATE BASIC COEFFICIENT CORRESPONDING TO DETERMINATION RESULT

S7 CALCULATE PORTION-DEPENDENT COEFFICIENT FOR EACH TARGET PORTION OF WORK VEHICLE OF INTEREST

S8 CALCULATE AND STORE VIRTUAL OPERATION TIME FOR EACH TARGET PORTION OF WORK VEHICLE OF INTEREST

END

# FIG. 10

| OPERATION CONDITION INFORMATION / MACHINE NUMBER | TOTAL OF ON AND OFF INFORMATION 1 | TOTAL OF ON AND OFF INFORMATION 2 | AVERAGE OF ANALOG INFORMATION 1 | AVERAGE OF ANALOG INFORMATION 2 |
|---|---|---|---|---|
| 2A1 | ——— | ——— | ——— | ——— |
| 2A2 | ——— | ——— | ——— | ——— |
| ⋮ | ⋮ | ⋮ | ⋮ | ⋮ |
| 2AL | ——— | ——— | ——— | ——— |

# FIG. 11

| CLASS NUMBER i | PROBABILITY RANGE | x VALUE RANGE |
|---|---|---|
| 1 | LESS THAN 5% | LESS THAN x1 |
| 2 | 5% OR MORE AND LESS THAN 15% | x1 OR MORE AND LESS THAN x2 |
| 3 | 15% OR MORE AND LESS THAN 25% | x2 OR MORE AND LESS THAN x3 |
| 4 | 25% OR MORE AND LESS THAN 35% | x3 OR MORE AND LESS THAN x4 |
| 5 | 35% OR MORE AND LESS THAN 45% | x4 OR MORE AND LESS THAN x5 |
| 6 | 45% OR MORE AND LESS THAN 50% | x5 OR MORE AND LESS THAN x6 |
| 7 | 50% OR MORE AND LESS THAN 55% | x6 OR MORE AND LESS THAN x7 |
| 8 | 55% OR MORE AND LESS THAN 65% | x7 OR MORE AND LESS THAN x8 |
| 9 | 65% OR MORE AND LESS THAN 75% | x8 OR MORE AND LESS THAN x9 |
| 10 | 75% OR MORE AND LESS THAN 85% | x9 OR MORE AND LESS THAN x10 |
| 11 | 85% OR MORE AND LESS THAN 95% | x10 OR MORE AND LESS THAN x11 |
| 12 | 95% OR MORE | x11 OR MORE |

# FIG. 12

| MODEL | MACHINE NUMBER | CLASSIFICATION RESULT | | | |
|---|---|---|---|---|---|
| | | BASIC COEFFICIENT A | BASIC COEFFICIENT B | BASIC COEFFICIENT C | BASIC COEFFICIENT D |
| | | TOTAL OF ON AND OFF INFORMATION 1 | TOTAL OF ON AND OFF INFORMATION 2 | AVERAGE OF ANALOG INFORMATION 1 | AVERAGE OF ANALOG INFORMATION 2 |
| YH1111 | 2A1 | CLASS 4 (25~35%) | CLASS 6 (45~50%) | CLASS 10 (75~85%) | CLASS 12 (95% OR MORE) |

# FIG. 13

| MODEL | MACHINE NUMBER | BASIC COEFFICIENT | | | |
|---|---|---|---|---|---|
| | | BASIC COEFFICIENT A | BASIC COEFFICIENT B | BASIC COEFFICIENT C | BASIC COEFFICIENT D |
| | | TOTAL OF ON AND OFF INFORMATION 1 | TOTAL OF ON AND OFF INFORMATION 2 | AVERAGE OF ANALOG INFORMATION 1 | AVERAGE OF ANALOG INFORMATION 2 |
| YH1111 | 2A1 | $k_4$ | $k_6$ | $k_{10}$ | $k_{12}$ |

# FIG. 14

| MODEL | MACHINE NUMBER | PORTION-DEPENDENT COEFFICIENT | | | |
|---|---|---|---|---|---|
| | | a1 PORTION | a2 PORTION | a3 PORTION | a4 PORTION |
| YH1111 | 2A1 | $k_4 \times k_6 \times k_{10}$ | $k_6 \times k_{10} \times k_{12}$ | $k_6 \times k_{10}$ | $k_{10} \times k_{12}$ |

# FIG. 15

| MODEL | MACHINE NUMBER | VIRTUAL OPERATION TIME | | | |
|---|---|---|---|---|---|
| | | a1 PORTION | a2 PORTION | a3 PORTION | a4 PORTION |
| YH1111 | 2A1 | $h(k_4 \times k_6 \times k_{10})$ | $h(k_6 \times k_{10} \times k_{12})$ | $h(k_6 \times k_{10})$ | $h(k_{10} \times k_{12})$ |

# FIG. 16

72

| MODEL | TARGET PORTION NAME | | | | | |
|---|---|---|---|---|---|---|
| | PORTION 1 | PORTION 2 | PORTION 3 | PORTION 4 | PORTION 5 | PORTION 6 |
| YH4444 | THRESHING PORTION | REAPING PORTION | GRAIN TANK PORTION | TRAVELING PORTION | ENGINE COOLING SYSTEM | ENGINE FUEL SYSTEM |

# FIG. 17

73

| MODEL | BASIC COEFFICIENT AND OPERATION CONDITION INFORMATION | | | |
|---|---|---|---|---|
| | BASIC COEFFICIENT A | BASIC COEFFICIENT B | BASIC COEFFICIENT C | |
| YH4444 | RATIO OF INTEGRATED VALUE OF THRESHING CLUTCH ON TIME TO ACTUAL OPERATION TIME | RATIO OF INTEGRATED VALUE OF REAPING CLUTCH ON TIME TO ACTUAL OPERATION TIME | RATIO OF INTEGRATED VALUE OF AUGER CLUTCH ON TIME TO ACTUAL OPERATION TIME | |

| BASIC COEFFICIENT D | BASIC COEFFICIENT E | BASIC COEFFICIENT F | BASIC COEFFICIENT G | BASIC COEFFICIENT H |
|---|---|---|---|---|
| AVERAGE VALUE OF ENGINE LOAD FACTOR | AVERAGE VALUE OF WASTE STRAW AMOUNT | AVERAGE VALUE OF VEHICLE SPEED | AVERAGE VALUE OF WATER TEMPERATURE | AVERAGE VALUE OF FUEL CONSUMPTION |

# FIG. 18

EP 4 036 818 A1

| MODEL | CALCULATION EXPRESSION FOR PORTION-DEPENDENT COEFFICIENT | | | | | |
|-------|---------------------------------|-------------------------------|----------------------------------|-----------------------------------|-------------------------------------------|-----------------------------------------|
|       | PORTION 1 (THRESHING PORTION) | PORTION 2 (REAPING PORTION) | PORTION 3 (GRAIN TANK PORTION) | PORTION 4 (TRAVELING PORTION) | PORTION 5 (ENGINE COOLING SYSTEM) | PORTION 6 (ENGINE FUEL SYSTEM) |
| YH4444 | A×D×E | B×E×F | C×E | D×F | G | H |

74

# FIG. 19

80

| MODEL | | ~81 |
| MACHINE NUMBER | | ~82 |
| OUTPUT YEAR | | ~83 |
| MACHINE NUMBER FOR COMPARISON | | ~84 |

OK ~85    END ~86

# FIG. 20

90

| MODEL | MACHINE NUMBER | ACTUAL OPERATION TIME IN PERIOD | VIRTUAL OPERATION TIME | | | |
| --- | --- | --- | --- | --- | --- | --- |
| | | | a1 PORTION | a2 PORTION | a3 PORTION | a4 PORTION |
| YH1111 | 2A1 | ——— | ——— | ——— | ——— | ——— |
| YH1111 | 2A2 | ——— | ——— | ——— | ——— | ——— |
| YH1111 | 2A3 | ——— | ——— | ——— | ——— | ——— |

# FIG. 21

101     100     102

**PORTION-DEPENDENT COEFFICIENT**

THRESHING PORTION

2.0

ENGINE
FUEL
SYSTEM

1.0

REAPING
PORTION

ENGINE
COOLING
SYSTEM

GRAIN
TANK
PORTION

TRAVELING PORTION

—— AVERAGE IN
MARKET    ------ 999999

**VIRTUAL OPERATION TIME OF
999999**

VIRTUAL OPERATION TIME (h)

200

150

100

50

0

ACTUAL OPERATION TIME
THRESHING PORTION
REAPING PORTION
GRAIN TANK PORTION
TRAVELING PORTION
ENGINE COOLING SYSTEM
ENGINE FUEL SYSTEM

103

RETURN

EP 4 036 818 A1

# FIG. 22

200

MAINTENANCE
MANAGEMENT SYSTEM

2

WORK MACHINE

24 — COMMUNICATION UNIT

25 — DISPLAY UNIT

3

SERVICE TERMINAL

42 — DISPLAY

44 — COMMUNICATION UNIT

SERVER — 4

ACQUISITION UNIT — 201

TIME CALCULATION UNIT — 202

OUTPUT UNIT — 203

GENERATION UNIT — 204

COMMUNICATION UNIT — 61

OPERATION DISPLAY UNIT — 62

OPERATION UNIT — 63

STORAGE UNIT — 64

# FIG. 23

EP 4 036 818 A1

T1

| MAJOR CATEGORY | INSPECTION PORTION | OPERATION TIME (h) | | | | | | | |
|---|---|---|---|---|---|---|---|---|---|
| | | 100 | 200 | 300 | 400 | 500 | 600 | 700 | 800 |
| ENGINE | BELT | O | O | O | O | ▲ | O | O | O |
| ENGINE | FILTER | O | O | O | ▲ | O | O | O | ▲ |
| ENGINE | PART A | | | ▲ | | | ▲ | | |
| ENGINE | PART B | O | O | ▲ | O | O | ▲ | O | O |
| TRAVELING PORTION | CRAWLER | | O | | O | | O | | O |
| TRAVELING PORTION | BEARING | | | | O | | | | ▲ |
| TRAVELING PORTION | SEAL | | O | | O | | ▲ | | O |
| TRAVELING PORTION | PART A | | | O | | O | | ▲ | |
| TRAVELING PORTION | PART B | | O | | | ▲ | | | O |
| TRAVELING PORTION | PART C | | O | | ▲ | | O | | ▲ |
| REAPING | BELT | O | O | O | O | ▲ | O | O | O |
| REAPING | CHAIN | O | | O | | O | | ▲ | |
| REAPING | PART A | O | O | ▲ | O | O | ▲ | O | O |
| REAPING | PART B | | | ▲ | | | | | ▲ |
| REAPING | PART C | O | | ▲ | | O | ▲ | | O |
| THRESHING | BELT | O | O | O | O | O | ▲ | O | O |
| THRESHING | CHAIN | | O | | O | | ▲ | | O |
| THRESHING | PART A | | | O | ▲ | | | O | ▲ |
| THRESHING | PART B | | | O | O | ▲ | | O | O |
| THRESHING | PART C | | O | | O | | O | ▲ | |
| GRAIN TANK | BELT | O | O | O | O | ▲ | O | O | O |
| GRAIN TANK | PART A | | | O | ▲ | | O | ▲ | |
| GRAIN TANK | PART B | | O | ▲ | | O | ▲ | | |
| ELECTRIC COMPONENT | PART A | O | ▲ | O | ▲ | O | ▲ | O | ▲ |
| ELECTRIC COMPONENT | PART B | | | ▲ | O | | ▲ | O | |
| ELECTRIC COMPONENT | PART C | | O | ▲ | | O | ▲ | | |

M1
M2

# FIG. 24

T2

| MAJOR CATEGORY | INSPECTION PORTION | OPERATION TIME REFERENCE SOURCE |
|---|---|---|
| ENGINE | BELT | VIRTUAL OPERATION TIME - ENGINE |
| ENGINE | FILTER | VIRTUAL OPERATION TIME - ENGINE |
| ENGINE | PART A | VIRTUAL OPERATION TIME - ENGINE |
| ENGINE | PART B | VIRTUAL OPERATION TIME - ENGINE |
| TRAVELING PORTION | CRAWLER | VIRTUAL OPERATION TIME - TRAVELING PORTION |
| TRAVELING PORTION | BEARING | VIRTUAL OPERATION TIME - TRAVELING PORTION |
| TRAVELING PORTION | SEAL | VIRTUAL OPERATION TIME - TRAVELING PORTION |
| TRAVELING PORTION | PART A | VIRTUAL OPERATION TIME - TRAVELING PORTION |
| TRAVELING PORTION | PART B | VIRTUAL OPERATION TIME - TRAVELING PORTION |
| TRAVELING PORTION | PART C | ACTUAL OPERATION TIME |
| REAPING | BELT | VIRTUAL OPERATION TIME - REAPING |
| REAPING | CHAIN | VIRTUAL OPERATION TIME - REAPING |
| REAPING | PART A | VIRTUAL OPERATION TIME - REAPING |
| REAPING | PART B | VIRTUAL OPERATION TIME - REAPING |
| REAPING | PART C | VIRTUAL OPERATION TIME - REAPING |
| THRESHING | BELT | VIRTUAL OPERATION TIME - THRESHING |
| THRESHING | CHAIN | VIRTUAL OPERATION TIME - THRESHING |
| THRESHING | PART A | VIRTUAL OPERATION TIME - THRESHING |
| THRESHING | PART B | ACTUAL OPERATION TIME |
| THRESHING | PART C | ACTUAL OPERATION TIME |
| GRAIN TANK | BELT | VIRTUAL OPERATION TIME - GRAIN TANK |
| GRAIN TANK | PART A | VIRTUAL OPERATION TIME - GRAIN TANK |
| GRAIN TANK | PART B | VIRTUAL OPERATION TIME - GRAIN TANK |
| ELECTRIC COMPONENT | PART A | ACTUAL OPERATION TIME |
| ELECTRIC COMPONENT | PART B | ACTUAL OPERATION TIME |
| ELECTRIC COMPONENT | PART C | ACTUAL OPERATION TIME |

# FIG. 25

T3

|  | COEFFICIENT | VIRTUAL OPERATION TIME (h) | ACTUAL OPERATION TIME (h) |
|---|---|---|---|
| ENGINE | 1 | 400 | 400 |
| TRAVELING PORTION | 0.8 | 320 | |
| REAPING | 0.8 | 320 | |
| THRESHING | 1.2 | 480 | |
| GRAIN TANK | 0.6 | 240 | |

# FIG. 26

D1

EP 4 036 818 A1

| MAJOR CATEGORY | INSPECTION PORTION | | OPERATION TIME (h) | | | | | | | |
|---|---|---|---|---|---|---|---|---|---|---|
| | | | 100 | 200 | 300 | 400 | 500 | 600 | 700 | 800 |
| ENGINE | BELT | 400 | ○ | ○ | ○ | ○ | ▲ | ○ | ○ | ○ |
| ENGINE | FILTER | 400 | ○ | ○ | ○ | ▲ | ○ | ○ | ○ | ▲ |
| ENGINE | PART A | 400 | | | | ▲ | ○ | ▲ | | |
| ENGINE | PART B | 400 | ○ | ○ | ▲ | ○ | ○ | ▲ | ○ | ○ |
| TRAVELING PORTION | CRAWLER | 320 | | ○ | | ○ | | ○ | | ○ |
| TRAVELING PORTION | BEARING | 320 | | | | ○ | | | | ▲ |
| TRAVELING PORTION | SEAL | 320 | | ○ | | ○ | | ▲ | | ○ |
| TRAVELING PORTION | PART A | 320 | | | ○ | | ○ | | ▲ | |
| TRAVELING PORTION | PART B | 320 | | ○ | | | ▲ | | | ○ |
| TRAVELING PORTION | PART C | 400 | | ○ | | ▲ | | ○ | | ▲ |
| REAPING | BELT | 320 | ○ | ○ | ○ | ○ | ▲ | ○ | ○ | ○ |
| REAPING | CHAIN | 320 | ○ | | ○ | | ○ | | ▲ | |
| REAPING | PART A | 320 | ○ | ○ | ▲ | ○ | ○ | ▲ | ○ | ○ |
| REAPING | PART B | 320 | | | | ▲ | | | | ▲ |
| REAPING | PART C | 320 | ○ | | ▲ | | ○ | ▲ | | ○ |
| THRESHING | BELT | 480 | ○ | ○ | ○ | ○ | ○ | ▲ | ○ | ○ |
| THRESHING | CHAIN | 480 | | ○ | | ○ | | ▲ | | ○ |
| THRESHING | PART A | 480 | | | ○ | ▲ | | | ○ | ▲ |
| THRESHING | PART B | 400 | | | ○ | ○ | ▲ | | ○ | ○ |
| THRESHING | PART C | 400 | | ○ | | ○ | ○ | ▲ | | |
| GRAIN TANK | BELT | 240 | ○ | ○ | | | ▲ | ○ | ○ | ○ |
| GRAIN TANK | PART A | 240 | | | ○ | ▲ | | ○ | ▲ | |
| GRAIN TANK | PART B | 240 | | ○ | ▲ | | ○ | ▲ | | |
| ELECTRIC COMPONENT | PART A | 400 | ○ | ▲ | ○ | ▲ | ○ | ▲ | ○ | ▲ |
| ELECTRIC COMPONENT | PART B | 400 | | | ▲ | ○ | | ▲ | ○ | |
| ELECTRIC COMPONENT | PART C | 400 | | ○ | ▲ | | ○ | ▲ | | |

M1
M2
G1
M2
M1
G1
G1
G2
G1
G2

# FIG. 27

D2

| MAJOR CATEGORY | INSPECTION PORTION | OPERATION TIME (h) | | | | | | | | WORK THAT IS NEEDED TO BE PERFORMED |
|---|---|---|---|---|---|---|---|---|---|---|
| | | 100 | 200 | 300 | 400 | 500 | 600 | 700 | 800 | |
| ENGINE | BELT | 400 ○ | ○ | ○ | (○) | ▲ M1 | ○ | ○ | ○ | INSPECTION·ADJUSTMENT·CLEANING |
| ENGINE | FILTER | 400 ○ | ○ | ○ | ▲ | ○ M2 | ○ | ○ | ▲ | REPLACEMENT |
| ENGINE | PART A | 400 | | | (▲) | | ▲ | | | REPLACEMENT |
| ENGINE | PART B | 400 ○ | ○ | ▲ | (○) | ○ G1 | ▲ | ○ | ○ | INSPECTION·ADJUSTMENT·CLEANING |
| TRAVELING PORTION | CRAWLER | 320 | | (○) | | ○ M1 | ○ | | ○ | INSPECTION·ADJUSTMENT·CLEANING |
| TRAVELING PORTION | BEARING | 320 | | | | ○ | M2 | | ▲ | - |
| TRAVELING PORTION | SEAL | 320 | | (○) | | ○ | ▲ | | ○ | INSPECTION·ADJUSTMENT·CLEANING |
| TRAVELING PORTION | PART A | 320 | | | (○) | | ○ | ▲ | | INSPECTION·ADJUSTMENT·CLEANING |
| TRAVELING PORTION | PART B | 320 | | (○) | | ▲ G1 | | | ○ | INSPECTION·ADJUSTMENT·CLEANING |
| TRAVELING PORTION | PART C | 400 | ○ | | (▲) G2 | ○ | ○ | | ▲ | REPLACEMENT |
| REAPING | BELT | 320 ○ | ○ | (○) | ○ | ▲ | ○ | ○ | ○ | INSPECTION·ADJUSTMENT·CLEANING |
| REAPING | CHAIN | 320 ○ | | (○) | | ○ | | ▲ | | INSPECTION·ADJUSTMENT·CLEANING |
| REAPING | PART A | 320 ○ | ○ | (▲) | ○ | ○ | ▲ | ○ | ○ | REPLACEMENT |
| REAPING | PART B | 320 | | | ▲ | | | | ▲ | - |
| REAPING | PART C | 320 ○ | | (▲) | | ○ | ▲ | | ○ | REPLACEMENT |
| THRESHING | BELT | 480 ○ | ○ | ○ | ○ | (○) | ▲ | ○ | ○ | INSPECTION·ADJUSTMENT·CLEANING |
| THRESHING | CHAIN | 480 | ○ | | (○) | | ▲ | | ○ | INSPECTION·ADJUSTMENT·CLEANING |
| THRESHING | PART A | 480 | | ○ | (▲) | G1 | | ○ | ▲ | REPLACEMENT |
| THRESHING | PART B | 400 | | ○ | (○) | ▲ | | ○ | ○ | INSPECTION·ADJUSTMENT·CLEANING |
| THRESHING | PART C | 400 | ○ | | (○) G2 | ▲ | ○ | ▲ | | INSPECTION·ADJUSTMENT·CLEANING |
| GRAIN TANK | BELT | 240 ○ | (○) | ○ | ○ | ▲ | ○ | ○ | ○ | INSPECTION·ADJUSTMENT·CLEANING |
| GRAIN TANK | PART A | 240 | | ○ | ▲ | | ○ | ▲ | | - |
| GRAIN TANK | PART B | 240 | (○) | ▲ | | ○ | ▲ | | | INSPECTION·ADJUSTMENT·CLEANING |
| ELECTRIC COMPONENT | PART A | 400 ○ | ▲ | ○ | (▲) | ○ | ▲ | ○ | ▲ | REPLACEMENT |
| ELECTRIC COMPONENT | PART B | 400 | ▲ | | (○) | ▲ | ○ | | | INSPECTION·ADJUSTMENT·CLEANING |
| ELECTRIC COMPONENT | PART C | 400 | ○ | (▲) | | ○ | ▲ | | | REPLACEMENT |

EP 4 036 818 A1

# FIG. 28

| MAJOR CATEGORY | INSPECTION PORTION | OPERATION TIME (h) | NEXT INSPECTION TIMING | NEXT PARTS REPLACEMENT TIMING | COEFFICIENT | ACTUAL OPERATION TIME EQUIVALENCE | |
|---|---|---|---|---|---|---|---|
| | | | | | | TIME TO NEXT INSPECTION | TIME TO NEXT PARTS REPLACEMENT |
| ENGINE | BELT | 400 | 500 | 500 | 1.0 | 100.0 | 100.0 |
| ENGINE | FILTER | 400 | 500 | 800 | 1.0 | 100.0 | 400.0 |
| ENGINE | PART A | 400 | 600 | 600 | 1.0 | 200.0 | 200.0 |
| ENGINE | PART B | 400 | 500 | 600 | 1.0 | 100.0 | 200.0 |
| TRAVELING PORTION | CRAWLER | 320 | 400 | 1000 | 0.8 | 100.0 | 850.0 |
| TRAVELING PORTION | BEARING | 320 | 400 | 800 | 0.8 | 100.0 | 600.0 |
| TRAVELING PORTION | SEAL | 320 | 400 | 600 | 0.8 | 100.0 | 350.0 |
| TRAVELING PORTION | PART A | 320 | 500 | 700 | 0.8 | 225.0 | 475.0 |
| TRAVELING PORTION | PART B | 320 | 500 | 500 | 0.8 | 225.0 | 225.0 |
| TRAVELING PORTION | PART C | 400 | 600 | 800 | - | 200.0 | 400.0 |
| REAPING | BELT | 320 | 400 | 500 | 0.8 | 100.0 | 225.0 |
| REAPING | CHAIN | 320 | 500 | 700 | 0.8 | 225.0 | 475.0 |
| REAPING | PART A | 320 | 400 | 600 | 0.8 | 100.0 | 350.0 |
| REAPING | PART B | 320 | 400 | 400 | 0.8 | 100.0 | 100.0 |
| REAPING | PART C | 320 | 500 | 600 | 0.8 | 225.0 | 350.0 |
| THRESHING | BELT | 480 | 600 | 600 | 1.2 | 100.0 | 100.0 |
| THRESHING | CHAIN | 480 | 600 | 600 | 1.2 | 100.0 | 100.0 |
| THRESHING | PART A | 480 | 700 | 800 | 1.2 | 183.3 | 266.7 |
| THRESHING | PART B | 400 | 500 | 500 | - | 100.0 | 100.0 |
| THRESHING | PART C | 400 | 600 | 700 | - | 200.0 | 300.0 |
| GRAIN TANK | BELT | 240 | 300 | 500 | 0.6 | 100.0 | 433.3 |
| GRAIN TANK | PART A | 240 | 300 | 400 | 0.6 | 100.0 | 266.7 |
| GRAIN TANK | PART B | 240 | 300 | 300 | 0.6 | 100.0 | 100.0 |
| ELECTRIC COMPONENT | PART A | 400 | 500 | 600 | - | 100.0 | 200.0 |
| ELECTRIC COMPONENT | PART B | 400 | 600 | 600 | - | 200.0 | 200.0 |
| ELECTRIC COMPONENT | PART C | 400 | 500 | 600 | - | 100.0 | 200.0 |

EP 4 036 818 A1

# FIG. 29

START

S11 — ACQUIRE ACTUAL OPERATION TIME

S12 — CALCULATE VIRTUAL OPERATION TIME

S13 — SUPERIMPOSE ON MAINTENANCE TABLE

S14 — IS THERE WORK THAT IS NEEDED TO BE PERFORMED?  → No

Yes

S15 — EXTRACT WORK THAT IS NEEDED TO BE PERFORMED

S16 — CALCULATE TIME TO NEXT MAINTENANCE

S17 — CONVERT TO ACTUAL OPERATION TIME

S18 — OUTPUT MAINTENANCE INFORMATION

END

# FIG. 30

EP 4 036 818 A1

|  |  | OPERATION TIME (h) | | | | | | | | PARTS REPLACEMENT HISTORY (ACTUAL OPERATION TIME) | PARTS REPLACEMENT HISTORY (VIRTUAL OPERATION TIME) | WORK THAT IS NEEDED TO BE PERFORMED |
|---|---|---|---|---|---|---|---|---|---|---|---|---|
| MAJOR CATEGORY | INSPECTION PORTION | 100 | 200 | 300 | 400 | 500 | 600 | 700 | 800 |  |  |  |
| ENGINE | BELT | 400 | ○ | ○ | ○ | ○ M3 ▲ | ○ | ○ | ○ |  |  | INSPECTION·ADJUSTMENT·CLEANING |
| ENGINE | FILTER | 400 | ○ | ○ | ○ ☆ ▲ M2 | ○ | ○ | ○ | ▲ | 350 | 350 | REPLACEMENT⇒[INSPECTION·ADJUSTMENT·CLEANING] |
| ENGINE | PART A | 400 | | ★ | | ▲ | | | | 300 | 300 | REPLACEMENT |
| ENGINE | PART B | 400 | ○ | ○ | ▲ | ○ G1 ○ | ▲ | ○ | ○ |  |  | INSPECTION·ADJUSTMENT·CLEANING⇒[REPLACEMENT] |
| TRAVELING PORTION | CRAWLER | 320 | | ○ | M3 ○ M1 | | ○ | | ○ |  |  | INSPECTION·ADJUSTMENT·CLEANING |
| TRAVELING PORTION | BEARING | 320 | | | ○ | | | M2 | ▲ |  |  | - |
| TRAVELING PORTION | SEAL | 320 | | ○ | | ○ | ▲ M2 | | ○ |  |  | INSPECTION·ADJUSTMENT·CLEANING |
| TRAVELING PORTION | PART A | 320 | | | ○ | | ○ | ▲ | |  |  | INSPECTION·ADJUSTMENT·CLEANING |
| TRAVELING PORTION | PART B | 320 | | | ○ G1 | ▲ | | | ○ |  |  | INSPECTION·ADJUSTMENT·CLEANING |
| TRAVELING PORTION | PART C | 400 | | ○ | ▲ G2 | | ○ | | ▲ |  |  | TRAVELING PORTION |
| REAPING | BELT | 320 | ○ | ○ | ☆ | ○ ▲ | ○ | ○ | ○ | 300 | 240 | INSPECTION·ADJUSTMENT·CLEANING |
| REAPING | CHAIN | 320 | ○ | ○ | M3 | ○ | | ▲ | |  |  | INSPECTION·ADJUSTMENT·CLEANING |
| REAPING | PART A | 320 | ○ | ○ | ▲ | ○ | ○ | ▲ | ○ |  |  | REPLACEMENT |
| REAPING | PART B | 320 | | | ▲ | | | ▲ | |  |  | - |
| REAPING | PART C | 320 | ○ | ☆ ▲ M3 | | ○ | ▲ | | ○ | 250 | 200 | REPLACEMENT⇒[INSPECTION·ADJUSTMENT·CLEANING] |
| THRESHING | BELT | 480 | ○ | ○ | ○ | ○ ○ | ▲ | ○ | ○ |  |  | INSPECTION·ADJUSTMENT·CLEANING |
| THRESHING | CHAIN | 480 | | ○ | | ○ | ▲ | | ○ |  |  | INSPECTION·ADJUSTMENT·CLEANING |
| THRESHING | PART A | 480 | | ☆ | ▲ | | ○ | ▲ | | 300 | 360 | REPLACEMENT⇒[INSPECTION·ADJUSTMENT·CLEANING] |
| THRESHING | PART B | 400 | | ○ | ○ | ▲ G1 | ○ | ○ | |  |  | INSPECTION·ADJUSTMENT·CLEANING |
| THRESHING | PART C | 400 | ○ | | ○ G2 | ○ | ▲ | | |  |  | INSPECTION·ADJUSTMENT·CLEANING |
| GRAIN TANK | BELT | 240 | ○ | ○ | ○ | ○ ▲ | ○ | ○ | ○ |  |  | INSPECTION·ADJUSTMENT·CLEANING |
| GRAIN TANK | PART A | 240 | | | ○ | ▲ | ○ | ▲ | |  |  | - |
| GRAIN TANK | PART B | 240 | | ○ | ▲ M3 | ○ | ▲ | | |  |  | INSPECTION·ADJUSTMENT·CLEANING |
| ELECTRIC COMPONENT | PART A | 400 | ○ | ★ | ○ ▲ | ○ | ▲ | ○ | ▲ | 200 | 200 | REPLACEMENT |
| ELECTRIC COMPONENT | PART B | 400 | ○ | ★ | ○ | | ▲ | ○ | | 300 | 300 | INSPECTION·ADJUSTMENT·CLEANING |
| ELECTRIC COMPONENT | PART C | 400 | ○ | ▲ | | ○ | ▲ | | |  |  | REPLACEMENT |

D4

**INTERNATIONAL SEARCH REPORT**

| International application No. |
| --- |
| PCT/JP2020/032125 |

A. CLASSIFICATION OF SUBJECT MATTER
G06Q 10/00(2012.01)i; A01B 69/00(2006.01)i; E02F 9/20(2006.01)i; G01M
17/007(2006.01)i
FI: G06Q10/00 300; G01M17/007 Z; E02F9/20 N; A01B69/00 303Z
According to International Patent Classification (IPC) or to both national classification and IPC

B. FIELDS SEARCHED

Minimum documentation searched (classification system followed by classification symbols)
G06Q10/00; A01B69/00; E02F9/20; G01M17/007

Documentation searched other than minimum documentation to the extent that such documents are included in the fields searched
Published examined utility model applications of Japan       1922-1996
Published unexamined utility model applications of Japan     1971-2020
Registered utility model specifications of Japan             1996-2020
Published registered utility model applications of Japan     1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y<br>A | JP 2013-218408 A (MITSUBISHI HEAVY INDUSTRIES, LTD.) 24 October 2013 (2013-10-24) paragraphs [0015]-[0027], fig. 1 | 1-3, 11, 18-19<br>4-5, 12-17<br>6-10 |
| Y | WO 2009/119032 A1 (ADVANTEST CORPORATION) 01 October 2009 (2009-10-01) paragraphs [0027]-[0041], fig. 5 | 4-5 |
| Y | JP 2014-070434 A (KUBOTA CORP.) 21 April 2014 (2014-04-21) paragraphs [0017]-[0032], fig. 3 | 12-17 |

☐ Further documents are listed in the continuation of Box C.   ☒ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 19 November 2020 (19.11.2020) | 01 December 2020 (01.12.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

International application No.

PCT/JP2020/032125

| Patent Documents referred in the Report | Publication Date | Patent Family | Publication Date |
|---|---|---|---|
| JP 2013-218408 A | 24 Oct. 2013 | (Family: none) | |
| WO 2009/119032 A1 | 01 Oct. 2009 | (Family: none) | |
| JP 2014-070434 A | 21 Apr. 2014 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 6126029 A